# EUROPÄISCHE PATENTSCHRIFT

(11) **EP 2 276 934 B1**
(45) Veröffentlichungstag und Bekanntmachung des Hinweises auf die Patenterteilung: **07.09.2011**
(21) Anmeldenummer: 09741999.8
(22) Anmeldetag: 27.04.2009
(51) Int. Cl.: F04D 29/046

(54) **UMWÄLZPUMPE**
CIRCULATING PUMP
POMPE DE RECIRCULATION

(30) Priorität: 05.05.2008 DE 102008023574
(43) Veröffentlichungstag der Anmeldung: 26.01.2011
(73) Patentinhaber: ITT Manufacturing Enterprises, Inc., Wilmington, Delaware 19801 (US)
(72) Erfinder: LAING, Karsten, 71566 Althütte (DE)
(74) Vertreter: Hoeger, Stellrecht & Partner Patentanwälte
(86) Internationale Anmeldenummer: PCT/EP2009/055078
(87) Internationale Veröffentlichungsnummer: WO 2009/135781

(56) Entgegenhaltungen:
- DE-A1- 2 424 552
- DE-U1- 8 716 971
- DE-U1- 20 217 109
- US-A- 4 072 446

## Beschreibung

Die Erfindung betrifft eine Umwälzpumpe, umfassend einen Stator, einen Rotor, eine Lagereinrichtung mit einem konvexen Lagerkörper und mindestens einer konkaven Lagerschale, über welche der Rotor drehbar gelagert ist, und ein Laufrad, welches drehfest mit dem Rotor verbunden ist.

Aus der EP 1 593 852 A2 sind eine Umwälzpumpe und ein Verfahren zur Flüssigschmierung eines sphärischen Lagers in einem Elektromotor bekannt. Die Umwälzpumpe umfasst einen Elektromotor, welcher einen Rotor und einen Stator aufweist, wobei der Rotor an einem sphärischen Lager gelagert ist, welches einen Gleitkörper mit konvexer sphärischer Oberfläche und eine Lagerpfanne mit konkaver sphärischer Oberfläche aufweist und welches flüssigkeitsgeschmiert ist. Eine Strömungsführung zur Durchführung von Schmierungsflüssigkeit durch einen Schmierungsbereich zwischen dem Gleitkörper und der Lagerpfanne ist getrennt von einem Spalt zwischen Stator und Rotor.

Aus der DE 24 24 552 A1, die alle Merkmale des Oberbegriffs des Anspruchs 1 enthält, ist eine Maschine bekannt, bestehend aus einer rotordynamischen Pumpe für Flüssigkeiten oder Gase und einer elektrischen Umlaufmaschine, bestehend aus einem elektromagnetischen Stator, der ein Drehfeld erzeugt oder einen elektromotorisch getriebenen, permanentmagnetischen Polring, der ein Drehfeld erzeugt, und einem Läufer, der mit dem Stator oder dem permanentmagnetischen Polring einen sphärischen Luftspalt bildet, in dem sich eine Trennwand befindet, die den Innenraum der Pumpe von dem Raum der elektrischen Maschine hermetisch dicht trennt, und einem sphärischen Lager, das die Läufer-Laufrad-Einheit axial und radial lagert. Dieses sphärische Lager ist über ein Element mit dem Gehäuse der Pumpe verbunden, wobei das tragende Element mit dem Pumpengehäuse fest verbunden ist und eine Abstützung von Kräften gewährleistet, die zur Ansaugseite des Strömungsmaschinengehäuses hin gerichtet sind.

Eine Lagereinrichtung mit einem konvexen Lagerkörper und einer konkaven Lagerschale (Lagerpfanne), welche jeweils einander zugewandte sphärische Oberflächen aufweisen, wird auch als sphärisches Lager bezeichnet.

Der Erfindung liegt die Aufgabe zugrunde, eine Umwälzpumpe der eingangs genannten Art bereitzustellen, welche eine verringerte Spaltdurchströmung des Spalts zwischen Rotor und Stator aufweist und/oder bei der ein axiales Abheben des Laufrads auf effektive Weise verhinderbar ist.

Diese Aufgabe wird bei der eingangs genannten Umwälzpumpe erfindungsgemäß dadurch gelöst, dass ein Wellenelement drehfest mit dem Rotor und drehfest mit dem Laufrad verbunden ist und dass das Wellenelement durch den Lagerkörper durchgeführt ist und relativ zu dem Lagerkörper drehbar ist.

Durch das Vorsehen eines zusätzlichen Wellenelements, welches das Laufrad mit dem Rotor verbindet, lässt sich der Rotor strömungsmäßig von einer Strömung in einem Laufradraum entkoppeln. Es ist dann keine Strömung von Förderflüssigkeit durch einen Luftspalt am Rotor mehr notwendig, um eine Flüssigschmierung der Lagereinrichtung zu bewirken. Dadurch wiederum lässt es sich verhindern, dass magnetische Partikel, welche in der Förderflüssigkeit enthalten sein können, zu dem Rotor gelangen und sich dort ablagern können. Die Ablagerung von magnetischen Partikeln an dem Rotor kann zu einer Festsetzung der Umwälzpumpe führen.

Durch das Vorsehen des Wellenelements ist es grundsätzlich auch möglich, die Gleitlagerung der sphärisch konkaven Lagerschale an dem mindestens bereichsweise sphärisch konvexen Lagerkörper (Gleitkörper) außerhalb des Rotors durchzuführen. Dadurch lässt sich der Rotor einfacher gestalten.

Es ist dadurch auch möglich, eine Lagereinrichtung bereitzustellen, welche in zwei Richtungen über zwei Lagerschalen sich an dem Lagerkörper abstützt.

Insbesondere weist der Lagerkörper eine (durchgehende) Ausnehmung auf, in welcher das Wellenelement (drehbar) positioniert ist. Die Ausnehmung ist beispielsweise eine zylindrische Ausnehmung, welche sich zwischen gegenüberliegenden Polbereichen des Lagerkörpers erstreckt. Bei einer sphärischen Ausbildung des konvexen Lagerkörpers ist die Ausnehmung vorzugsweise koaxial zu einer Durchmesserrichtung ausgerichtet, wobei diese Durchmesserrichtung vorzugsweise senkrecht zu einer Äquatorialebene des Lagerkörpers ist.

Insbesondere weist das Wellenelement einen größten Außendurchmesser auf, welcher kleiner ist als ein kleinster Innendurchmesser der Ausnehmung. Zwischen dem Wellenelement und Ausnehmungswänden ist ein Spalt gebildet, der eine freie Drehbarkeit in der Ausnehmung ermöglicht. Es hat sich als günstig erwiesen, wenn die Spaltbreite mindestens 0,5 mm beträgt.

Günstig ist es, wenn das Wellenelement im Bereich eines Austrittsbereichs durch die Ausnehmung einen zurückgesetzten Bereich mit verringertem Durchmesser aufweist. Beispielsweise hat das Wellenelement eine ringförmige Vertiefung. Dadurch lässt sich ein Anschlagen des Wellenelements an eine Kante des Lagerkörpers, welche durch die Ausnehmung gebildet ist, verhindern. Solche Kanten sind, insbesondere wenn der konvexe Lagerkörper ein Keramikelement ist, in der Regel sehr schlagempfindlich. Wenn das Wellenelement in der Ausnehmung kippt, trifft das Wellenelement die Wand der Ausnehmung außerhalb der Kante und kann nicht an die Kante anschlagen. Insbesondere sind solche zurückgesetzten Bereiche an den gegenüberliegenden Austrittsbereichen durch die Ausnehmung gebildet; dabei liegt ein Austrittsbereich in einem Laufradraum und der andere Austrittsbereich liegt in einem Rotorraum. Es ist auch möglich, dass eine Spaltbreite zwischen dem Wellenelement und einer Ausnehmung im Lagerkörper so groß ist, dass auch bei maximaler Verkippung des Laufrads das Wellenelement den Lagerkörper nicht berührt. In diesem Falle schlägt der Rotor "außen" an, bevor das Wellenelement anschlägt.

Vorzugsweise ist das Wellenelement mindestens in einem Teilbereich, mit dem es durch den Lagerkörper geführt ist, zylindrisch ausgebildet. Dadurch lässt sich auch die Ausnehmung auf einfache Weise herstellen.

Günstig ist es, wenn der Lagerkörper zwischen einer Lagerschale, welche an dem Laufrad fixiert ist, und einem Fixierungsbereich des Wellenelements an dem Rotor angeordnet ist. Dadurch lässt sich auf einfache Weise eine drehfeste Verbindung zwischen dem Rotor und dem Laufrad realisieren, wobei das Laufrad dann direkt an dem Lagerkörper gelagert ist und über die Verbindung wiederum der Rotor "indirekt" an dem Lagerkörper gelagert ist. Es ist zusätzlich noch möglich, dass über eine weitere Lagerschale der Rotor auch direkt an dem Lagerkörper gleitend gelagert ist.

Ganz besonders vorteilhaft ist es, wenn der Lagerkörper durch einen Halter drehfest gehalten ist, welcher oberhalb des Rotors dem Laufrad zugewandt angeordnet ist. Der Halter lässt sich auf einfache Weise bezüglich eines Gehäuses der Umwälzpumpe fixieren. Er kann gleichzeitig als Trennelement benutzt werden, um einen Rotorraum von einem Laufradraum beispielsweise flüssigkeitsdicht zu trennen oder mindestens derart zu trennen, dass keine größeren magnetischen Partikel in den Rotorraum gelangen können.

Ganz besonders vorteilhaft ist es, wenn ein Rotorraum vorgesehen ist, in welchem der Rotor drehbar angeordnet ist, und ein Laufradraum vorgesehen ist, in welchem das Laufrad drehbar angeordnet ist, wobei der Rotorraum und der Laufradraum durch ein Trennelement voneinander getrennt sind. Das Trennelement trennt den Rotorraum von dem Laufradraum derart, dass keine magnetischen Partikel einer Mindestgröße in den Rotorraum gelangen können. Dies ist beispielsweise dadurch erreichbar, dass das Trennelement den Rotorraum vollständig flüssigkeitsdicht von dem Laufradraum trennt. Es ist aber auch grundsätzlich möglich, dass ein Flüssigkeitsaustausch zwischen dem Laufradraum und dem Rotorraum möglich ist, wobei dann entsprechende Austauschöffnungen einen Durchmesser aufweisen müssen, welcher das Eindringen von magnetischen Partikeln einer "kritischen Größe" in den Rotorraum nicht erlaubt.

Günstig ist es, wenn das Trennelement in Höhe des Lagerkörpers angeordnet ist und insbesondere derart angeordnet ist, dass es den Lagerkörper zu dessen Fixierung an oder in der Nähe einer Äquatorialebene hält. Dadurch ist ein relativ großer sphärischer Bereich an dem Lagerkörper als Gleitfläche für die sphärisch konkave Lagerschale bereitgestellt. Es ist dann grundsätzlich auch möglich, dass an dem Rotor selber zusätzlich eine Lagerschale angeordnet ist, welche an dem Lagerkörper gleitet.

Günstig ist es, wenn das Trennelement als Halter für den Lagerkörper ausgebildet ist. Dadurch lässt sich die Anzahl der Komponenten, welche für den Aufbau der Umwälzpumpe benötigt werden, niedrig halten. Durch das Trennelement lässt sich dann der Laufradraum von dem Rotorraum trennen und gleichzeitig ist durch das Trennelement der Lagerkörper fixiert.

Günstig ist es, wenn eine Lagerschale (welche sphärisch konkav ist), welche drehfest mit dem Laufrad verbunden ist und welche auf dem Lagerkörper gelagert ist, bezogen auf eine axiale Richtung zwischen dem Trennelement und dem Laufrad angeordnet ist. Dadurch ergibt sich ein einfacher Aufbau und es lassen sich vorteilhafte Schmierungsmöglichkeiten realisieren.

Das Trennelement koppelt den Rotorraum von einem Schmierungsraum der Lagereinrichtung, durch welche Flüssigkeit zur Schmierung beim Betrieb der Umwälzpumpe transportiert wird, ab, so dass zumindest nicht direkt Förderflüssigkeit aus dem Schmierungsraum in den Rotorraum strömen kann und dabei ein Strömungskreislauf gebildet ist. Dadurch können auch keine magnetischen Partikel über den Schmierungsraum in den Rotorraum gelangen.

Es ist dabei möglich, dass das Trennelement flüssigkeitsdicht ausgebildet ist oder höchstens eine oder mehrere Öffnungen zwischen dem Laufradraum und dem Rotorraum aufweist, deren Durchmesser höchstens 0,3 mm beträgt. Wenn das Trennelement vollständig flüssigkeitsdicht ausgebildet ist, dann kann kein Flüssigkeitsaustausch zwischen dem Laufradraum und dem Rotorraum erfolgen, d. h. es kann keine Förderflüssigkeit in den Rotorraum gelangen und damit können auch keine magnetischen Partikel, welche in der Förderflüssigkeit enthalten sind, in den Rotorraum gelangen. Grundsätzlich kann eine Strömung von Flüssigkeit in dem Rotorraum wünschenswert sein, um effektiver Wärme abführen zu können. Die Wärmeabfuhr erfolgt dabei durch einen Wärmeübergang an Förderflüssigkeit in den Laufradraum. Es kann dann wünschenswert sein, eine Flüssigkeitsströmung in dem Rotorraum auszubilden. Wenn eine Flüssigkeitsbefüllung (Erstbefüllung) des Rotorraums aus dem Laufradraum heraus vorgesehen ist, dann muss durch entsprechend kleine Ausbildung der mindestens einen Öffnung verhindert werden, dass magnetische Partikel einer kritischen Größe in den Rotorraum gelangen können. Wenn der Durchmesser einer entsprechenden Öffnung höchstens 0,3 mm beträgt, dann kann dieses Eindringen von magnetischen Partikeln in den Rotorraum auf effektive Weise verhindert werden.

Vorteilhaft ist es, wenn das Trennelement eine Rippenstruktur aufweist. Die Rippenstruktur kann dabei dem Laufradraum zugewandt sein und/oder dem Rotorraum. Durch die Rippenstruktur wird die Oberfläche des Trennelements erhöht. Dadurch wird die Fläche erhöht, über welche ein Wärmeübergang erfolgen kann. Es lässt sich dann eine effektivere Kühlungswirkung erzielen. Eine Rippenstruktur kann auch die Steifigkeit des Trennelements erhöhen. Dadurch lässt sich das Eigenfrequenzspektrum des rotierenden Systems beeinflussen. Durch eine entsprechend ausgebildete Rippenstruktur lässt sich insbesondere das Eigenfrequenzspektrum so beeinflussen, dass eine tiefste Eigenfrequenz unterhalb und insbesondere weit unterhalb von 600 Hz liegt.

Bei einer Ausführungsform ist zwischen dem Trennelement und einer den Rotor umgebenden Trennkalotte mindestens eine Dichtung angeordnet. Eine solche Dichtung ist insbesondere vorgesehen, wenn das Trennelement flüssigkeitsdicht ausgebildet ist, um den Rotorraum vollständig von dem Laufradraum bezüglich des Eindringens von Flüssigkeit abzuschirmen. Es wird dadurch ein geschlossenerRotorraum bereitgestellt wobei kein Flüssigkeitsaustausch mit dem Laufradraum möglich ist.

Es ist dann günstig, wenn der Rotorraum mit Flüssigkeit vorbefüllt ist. Beispielsweise ist eine Vorbefüllung mit einem Wasser-Glykose-Gemisch vorgesehen. Diese Flüssigkeit dient als Wärmeübertragungsfluid zur effektiveren Wärmeabfuhr von dem Stator als primäre Wärmequelle über den Rotor in den Laufradraum.

Bei einem Ausführungsbeispiel ist ein Schmierungsraum für die Lagereinrichtung flüssigkeitsmäßig von einem Laufradraum, in welchem das Laufrad rotiert, getrennt. Der Schmierungsraum ist dann an den Rotorraum angekoppelt. Der Rotorraum ist dadurch ein Reservoir für Schmiermittel. Es wird dann keine Förderflüssigkeit als Schmierungsflüssigkeit verwendet. Anstatt dessen wird ein interner Schmiermittelkreislauf bereitgestellt. Dadurch lässt sich eine effektive Schmierung der Lagereinrichtung auch bei abrasiven Förderflüssigkeiten erreichen.

Es ist dann insbesondere vorgesehen, dass das Wellenelement mindestens einen Kanal aufweist, über welchen Flüssigkeit vom Schmierungsraum zu dem Rotorraum, in welchem der Rotor rotiert, strömen kann. Insbesondere weist das Wellenelement einen entsprechenden Hohlkanal auf, um dies zu ermöglichen. Schmiermittelflüssigkeit aus dem Rotorraum kann dann dazu benutzt werden, um die entsprechende Lagereinrichtung zu schmieren. Diese ist flüssigkeitsmäßig von dem Laufradraum getrennt, so dass das Eindringen von abrasiven Partikeln in den Schmierungsraum verhindert ist, wobei eine effektive Flüssigschmierung der Lagereinrichtung gewährleistet ist.

Insbesondere ist die mindestens eine Lagerschale zu dem Laufradraum hin abgedichtet, um das Eindringen von Förderflüssigkeit in den Schmierungsraum und damit auch in den Rotorraum zu verhindern.

Vorteilhafterweise weist dann die mindestens eine Lagerschale Kanäle auf, über welche Flüssigkeit, welche durch einen Spalt an dem Lagerkörper um das Wellenelement strömt, dem mindestens einen Kanal des Wellenelements zuführbar ist. Dadurch ist ein Kreislauf für eine Schmiermittelströmung zwischen dem Rotorraum und dem Schmierungsraum ermöglicht, um eine effektive Flüssigschmierung der Lagereinrichtung zu bewirken.

Es ist dann weiterhin günstig, wenn durch den Rotor, welcher in einem Rotorraum rotiert, eine Reibungspumpe (Friktionspumpe) gebildet ist, welche einen Schmiermittelfluss durch den Schmierungsraum antreibt. Diese Reibungspumpe erzeugt den notwendigen Druckunterschied, um Schmiermittel aus dem Rotorraum durch den Schmierungsraum an der Lagereinrichtung durchzutreiben.

Bei einem Ausführungsbeispiel ist ein Halter für den Lagerkörper auf einem Beeinflussungselement für die Eigenfrequenzen des rotierenden Systems gelagert. Dieses Beeinflussungselement sorgt für eine Vibrationsentkopplung. Es ist beispielsweise als Gummilager ausgebildet. Durch entsprechende Auswahl lässt sich ein Eigenfrequenzspektrum beeinflussen. Dadurch wiederum lässt sich die Geräuschentwicklung optimieren.

Insbesondere ist über das Beeinflussungselement die tiefste Eigenfrequenz auf einen Wert unterhalb von 600 Hz eingestellt und insbesondere auf einen Wert weit unterhalb 600 Hz eingestellt.

Bei einem Ausführungsbeispiel ist ein weiteres Trennelement vorgesehen, welches zwischen einem Halter für den Lagerkörper und dem Laufrad angeordnet ist und welches eine Mittelöffnung aufweist, durch welche der Lagerkörper mit Fluid beaufschlagbar ist. Das Trennelement ist so angeordnet, dass Fluid aus einem Hochdruckbereich der Umwälzpumpe abkoppelbar ist. Im Bereich um den Lagerkörper liegt ein Niederdruckgebiet vor. Es lässt sich dadurch Fluid auf den Lagerkörper aufspritzen. Dadurch erhält man eine effektive Schmierung und insbesondere ist eine Notschmierung realisiert, wenn beispielsweise die Förderflüssigkeit einen hohen Gasanteil enthält.

Insbesondere ist zwischen dem weiteren Trennelement und dem Halter mindestens ein Fluidkanal gebildet und an dem weiteren Trennelement ist mindestens eine Öffnung angeordnet, welche in einen Hochdruckbereich eines Laufradraums weist. Dadurch lässt sich Fluid aus dem Hochdruckbereich auskoppeln und auf den Lagerkörper spritzen, um eine effektive Schmierung und insbesondere Notschmierung zu ermöglichen.

Bei einem Ausführungsbeispiel ist an dem Rotor eine Schaufelstruktur angeordnet. Dadurch lässt sich in einem Rotorraum durch Rotation des Rotors ein Druckunterschied erzeugen, welcher zu einer mechanischen Axialkraft auf den Rotor führt. Diese ist in Richtung des Stators gerichtet und verursacht einen Haltekraftanteil in axialer Richtung. Dieser Haltekraftanteil erhöht die axiale Haltekraft für den Rotor an der Lagereinrichtung. Grundsätzlich kann der dynamische Druck beim Betrieb der Umwälzpumpe insbesondere bei hohen Förderhöhen ein Abheben des Laufrads von dem Lagerkörper bewirken. Durch die Schaufelstruktur an dem Rotor wird dem entgegengewirkt.

Bei einem Ausführungsbeispiel sind eine erste Lagerschale, welche an dem Lagerkörper gelagert ist, und eine zweite Lagerschale, welche an dem Lagerkörper gelagert ist, vorgesehen, wobei die erste Lagerschale drehfest mit dem Laufrad verbunden ist und die zweite Lagerschale drehfest mit dem Rotor verbunden ist. Dadurch lässt sich der Rotor direkt an dem sphärisch konvexen Lagerkörper abstützen und das Laufrad lässt sich direkt an der sphärisch konkaven Lagerschale abstützen. Dies kann je nach Ausgestaltung verschiedene Vorteile haben. Beispielsweise lässt sich dadurch eine zusätzliche mechanische Haltekraft zur Verhinderung des Abhebens des Laufrads generieren bzw. das Abheben des Laufrads lässt sich vollständig verhindern.

Insbesondere sind die erste Lagerschale und die zweite Lagerschale an gegenüberliegenden Polbereichen des Lagerkörpers angeordnet. Dadurch lässt sich die Kombination aus Rotor und Laufrad gewissermaßen an dem Lagerkörper einspannen.

Insbesondere erstreckt sich dann ein Teilbereich des Wellenelements, welcher durch den Lagerkörper geführt ist, zwischen der ersten Lagerschale und der zweiten Lagerschale. Dadurch lässt sich eine Lagereinrichtung realisieren, welche beabstandete, gegenüberliegende sphärische Gleitflächen aufweist.

Es ist ferner günstig, wenn das Wellenelement durch die erste Lagerschale und die zweite Lagerschale geführt ist. Dadurch lässt es sich auf effektive Weise mit dem Rotor und dem Laufrad drehfest verbinden.

Bei einer Ausführungsform ist die zweite Lagerschale über eine Federeinrichtung an dem Rotor abgestützt. Die Federeinrichtung übt dabei eine Zusatzkraft in Richtung des Stators aus, d. h. die zweite Lagerschale ist vorgespannt. Es wirkt dadurch eine zusätzliche mechanische Haltekraft zur Verhinderung des Abhebens des Laufrads.

Bei einer alternativen Ausführungsform ist die erste Lagerschale über eine Federeinrichtung an dem Laufrad abgestützt. In diesem Fall ist über die zweite Lagerschale und dem entsprechenden Polbereich des Lagerkörpers ein Hauptlager gebildet, über welches der Rotor drehbar gelagert ist. Die zweite Lagerschale wirkt "von unten" auf den Lagerkörper, d. h. auf einen Polbereich, welcher dem Polbereich gegenüberliegt, welcher in Direktkontakt mit der an dem Laufrad fixierten ersten Lagerschale ist. Es ist dadurch ein Abheben des Laufrads verhindert. Die erste Lagerschale stellt sicher, dass die Laufrad-Rotor-Kombination an dem Lagerkörper eingespannt ist und trägt das System aus Rotor und Laufrad bei Start, Stopp und Stillstand und im Allgemeinen in Situationen, bei denen die hydraulische Kraft kleiner ist als die magnetische Haltekraft, welche in Richtung des Stators wirkt. Die Federeinrichtung ermöglicht dabei eine einfache Herstellbarkeit, wobei größere Toleranzen ermöglicht sind.

Es kann vorgesehen sein, dass in der Ausnehmung zwischen einer Wand der Ausnehmung und dem Wellenelement eine Dichtung angeordnet ist. Die Dichtung kann dabei grundsätzlich auf dem Wellenelement angeordnet sein und insbesondere mit diesem rotieren, oder sie kann an der Wand der Ausnehmung angeordnet sein und das Wellenelement kann gegen diese rotieren. Es ist auch eine Mischform möglich, bei welcher die Dichtung durch das Wellenelement mitnehmbar ist und dabei mit einer Drehgeschwindigkeit rotiert, welche im Mittel kleiner ist als die Drehgeschwindigkeit des Wellenelements. Durch eine solche Dichtung lässt sich der Rotorraum weiter abdichten; durch einen Spalt zwischen der Wand der Ausnehmung und dem Wellenelement kann dann keine Flüssigkeit aus dem Laufradraum bzw. dem Schmierungsraum in den Rotorraum gelangen.

Es ist auch möglich, dass die konkave Lagerschale einen Dichtungsbereich zu der Ausnehmung für das Wellenelement aufweist. Dadurch wird ein Laufradraum über die Lagerschale flüssigkeitsdicht vom Rotorraum getrennt. Es lässt sich verhindern, dass Flüssigkeit aus dem Laufradraum, welche zur Schmierung der Lagereinrichtung verwendet wird, in die Ausnehmung und damit in den Rotorraum eindringen kann. Entsprechend weist die Lagerschale einen Innenrand auf, welcher Dichtungswirkung hat. Dieser Innenrand-Randbereich wird höchstens unvollständig geschmiert. Er kann aber nur an einer Auflagefläche auf dem konvexen Lagerkörper verschleißen und bildet dadurch ein genügend dichtes Abschlusselement zu der Ausnehmung hin.

Die nachfolgende Beschreibung bevorzugter Ausführungsformen dient im Zusammenhang mit den Zeichnungen der näheren Erläuterung der Erfindung. Es zeigen:
- Figur 1: eine schematische Schnittdarstellung eines ersten Aus- führungsbeispiels einer erfindungsgemäßen Umwälzpumpe;
- Figur 2: eine Variante des Ausführungsbeispiels gemäß Figur 1;
- Figur 3: eine weitere Variante des Ausführungsbeispiels gemäß Figur 1;
- Figur 4: eine weitere Variante des Ausführungsbeispiels gemäß Figur 1;
- Figur 5: eine weitere Variante der Umwälzpumpe gemäß Figur 1;
- Figur 6: eine schematische Schnittansicht eines zweiten Ausführungs- beispiels einer erfindungsgemäßen Umwälzpumpe;
- Figur 7: eine schematische Schnittansicht eines dritten Ausführungs- beispiels einer erfindungsgemäßen Umwälzpumpe;
- Figur 8: eine schematische Schnittansicht eines vierten Ausführungs- beispiels einer erfindungsgemäßen Umwälzpumpe;
- Figur 9: eine schematische Schnittansicht eines fünften Ausführungs- beispiels einer erfindungsgemäßen Umwälzpumpe;
- Figur 10: eine schematische Schnittansicht eines sechsten Ausführungs- beispiels einer erfindungsgemäßen Umwälzpumpe; und
- Figur 11: eine weitere Variante des Ausführungsbeispiels gemäß Figur 1.

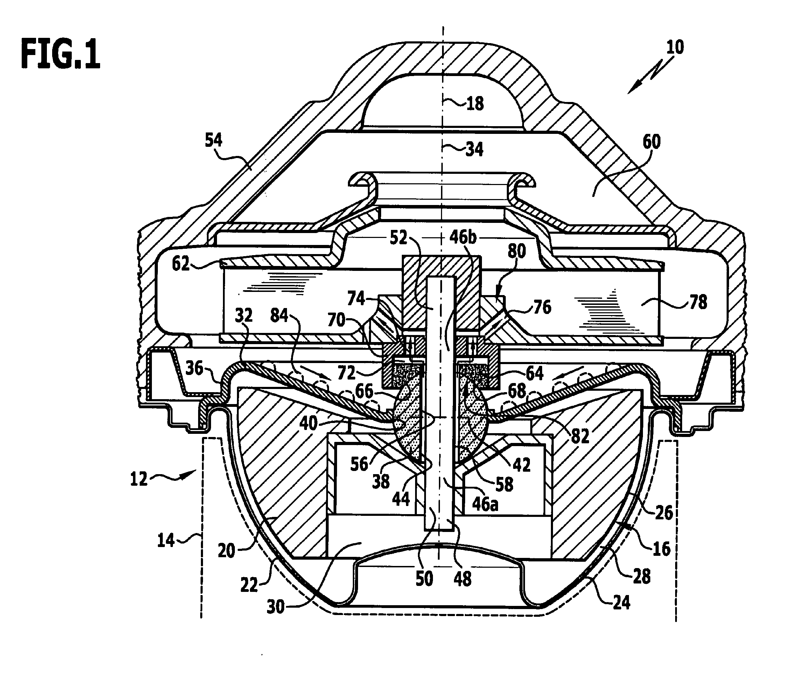

Das Ausführungsbeispiel einer erfindungsgemäßen Umwälzpumpe, welche in Figur 1 in einer schematischen Schnittdarstellung gezeigt und dort mit 10 bezeichnet ist, umfasst einen Elektromotor 12 mit einem Stator 14 und einem Rotor 16. Der Rotor 16 ist um eine Drehachse 18 drehbar (rotierbar).

Der Rotor 16 ist insbesondere magnetfelderzeugend. Der Rotor 16 umfasst dazu ein oder mehrere Magnetelemente 20 und insbesondere Permanentmagnetelemente. Der Stator 14 umfasst eine oder mehrere Spulenwicklungen (in der Zeichnung nicht gezeigt). Beispielsweise wird an dem Stator 14 ein zeitlich sich veränderndes Magnetfeld erzeugt und dadurch verändert sich die Magnetkraft zwischen dem Rotor 16 und dem Stator 14, wodurch die Drehbewegung des Rotors 16 angetrieben wird.

Dem Stator 14 und dem Rotor 16 ist eine Trennkalotte 22 zugeordnet, welche den Stator 14 flüssigkeitsdicht von dem Rotor 16 trennt. Die Trennkalotte 22 weist einen sphärischen Bereich 24 auf. Beispielsweise hat sie die Form einer abgeschnittenen Kugelschale.

Der Rotor 16 ist ebenfalls sphärisch ausgebildet mit einem sphärischen Bereich 26, welcher dem sphärischen Bereich 24 der Trennkalotte 22 zugewandt ist. Zwischen dem sphärischen Bereich 26 des Rotors 16 und der Trennkalotte 22 liegt ein Spalt 28 (Luftspalt).

Der Rotor 16 ist in einem Rotorraum 30 drehbar, wobei der Rotorraum 30 in einem Innenraum der Trennkalotte 22 liegt.

Der Rotorraum 30 ist nach oben hin durch ein Trennelement 32 begrenzt. Das Trennelement 32 ist an der Trennkalotte 22 abgestützt und beispielsweise mit dieser verbunden. Es kann dabei, wie unten noch näher erläutert wird, an dem Abstützungsbereich des Trennelements 32 an die Trennkalotte 22 eine Dichtung beispielsweise in Form eines O-Rings angeordnet sein.

Der Rotorraum 30 ist rotationssymmetrisch zu einer axialen Achse 34 der Umwälzpumpe 10 ausgebildet. Wenn der Rotor 16 nicht geneigt ist, dann fällt die Drehachse 18 mit der axialen Achse 34 zusammen.

Das Trennelement 32 ist als Halter 36 für einen sphärisch konvexen Lagerkörper 38 ausgebildet. Dazu umfasst der Halter 36 eine Öffnung 40, welche konzentrisch zur axialen Achse 34 liegt. In dieser Öffnung sitzt der Lagerkörper 38. Der Lagerkörper 38 ist insbesondere eine Lagerkugel, welche beispielsweise aus einem keramischen Material hergestellt ist. Sie ist in der Öffnung 40 des Trennelements 32 in einer Äquatorialebene 42 gehalten.

Der Lagerkörper 38 weist eine (zentrale) Ausnehmung (Öffnung) 44 auf, welche zwischen (bezogen auf die Äquatorialebene 42) gegenüberliegenden Polen 46a, 46b verläuft.

Durch die Ausnehmung 44 ist ein Wellenelement 48 durchgetaucht. Dieses Wellenelement 48 ist insbesondere zylindrisch ausgebildet. Die Ausnehmung 44 ist hohlzylindrisch ausgebildet. Das Wellenelement 48 ist über einen Verbindungsbereich 50 drehfest mit dem Rotor 16 verbunden. Es weist einen Bereich auf, welcher in der Ausnehmung 44 liegt. Mit einem weiteren Bereich 52 ragt es über die Ausnehmung 44 hinaus.

Der Lagerkörper 38 ist durch den Halter 36 drehfest bezüglich eines Gehäuses 54 der Umwälzpumpe 10 gehalten. Das Wellenelement 48 ist durch die Ausnehmung 44 drehbar durchgeführt. Bei einer Rotation des Rotors 16 relativ zu dem Stator 14 (und damit auch relativ zu dem Gehäuse 54) dreht sich der in der Ausnehmung 44 liegende Bereich des Wellenelements 48 relativ zu der Ausnehmung 44 um die Drehachse 18.

Zwischen einer Wand 56 der Ausnehmung 44 und dem Wellenelement 48 ist ein Spalt 58 gebildet. Das Wellenelement 48 weist dabei einen Außendurchmesser auf, welcher kleiner ist als der Innendurchmesser der Ausnehmung 44. Eine Spaltbreite des Spalts 58 ist durch die Differenz zwischen diesem Innendurchmesser und diesem Außendurchmesser vorgegeben.

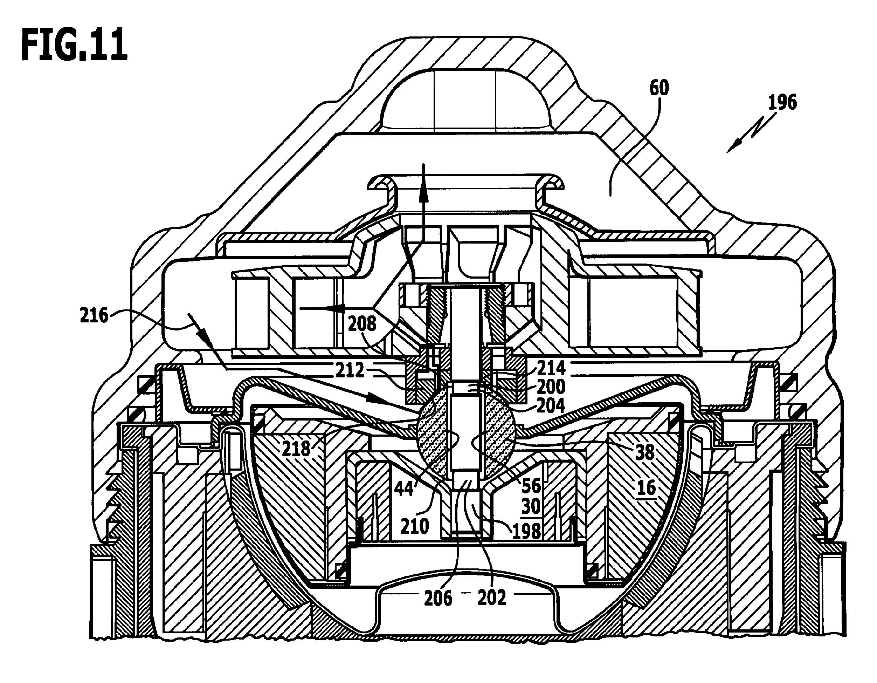

Die Spaltbreite ist bei einer Ausführungsform so gewählt, dass in der maximalen möglichen oder zulässigen Neigungsstellung des Rotors 16 relativ zu der axialen Achse 34 das Wellenelement 48 nicht die Wand 56 berührt und vorher der Rotor 16 anschlägt. Untenstehend wird im Zusammenhang mit der Figur 11 eine Variante erläutert, bei der das Wellenelement einen zurückgesetzten Bereich aufweist.

Insbesondere beträgt die Spaltbreite des Spalts 58 mindestens 0,5 mm.

Oberhalb des Rotorraums 30 ist durch das Gehäuse 54 begrenzt ein Laufradraum 60 gebildet. In diesem Laufradraum 60 ist ein Laufrad 62 drehbar angeordnet, wobei eine Drehachse des Laufrads 62 die Drehachse 18 ist.

Das Laufrad 62 ist drehfest mit dem Bereich 52 des Wellenelements 48 verbunden.

Weiterhin sitzt an dem Laufrad 62 drehfest eine Lagerschale 64, welche einen sphärisch konvexen Bereich 66 aufweist. Mit diesem konvexen Bereich 66 ist die Lagerschale 64 auf dem Lagerkörper 38 im Bereich des Pols 46b aufgesetzt.

Die Lagerschale 64 ist beispielsweise aus Graphit hergestellt.

Das Wellenelement 48 durchdringt die Lagerschale 64 durch eine entsprechende Ausnehmung.

Die Lagerschale: 64 ist in dem konkaven Bereich 66 sphärisch ausgebildet (als Hohlkugelabschnitt). Der konkave Bereich 66 bildet eine sphärische Gleitfläche 68.

Die Lagerschale 64 ist durch ein Verbindungselement 70, welches beispielsweise die Lagerschale 64 umfasst, drehfest mit dem Laufrad 62 verbunden. Zwischen einem Boden des Verbindungselements 70 und der Lagerschale 64 ist ein Ringkanal 72 gebildet, welcher bis zu dem Bereich 52 des Wellenelements 48 verläuft.

In den Ringkanal 72 münden ein oder mehrere Kanäle 74, welche mindestens näherungsweise parallel zur axialen Achse 34 ausgerichtet sind. An diese Kanäle 74 schließen sich ein oder mehrere Kanäle 76 an, welche in einen Hohlraum 78 des Laufrads 62 münden.

Durch den Ringkanal 72 und die Kanäle 74, 76 sind Strömungspfade bereitgestellt, durch die Flüssigkeit an der Gleitfläche 68 entlang in den Hohlraum 78 strömen kann. Dadurch ist ein Schmierungsraum 80 bereitgestellt. Der Lagerkörper 38 mit der Lagerschale 64 bildet eine Lagereinrichtung 82, über welche der Rotor 16 relativ zu dem Stator 14 drehbar gelagert ist. Über den Schmierungsraum 80 lässt sich die Lagereinrichtung 82 durch Förderflüssigkeit, welche durch die Umwälzpumpe 10 gefördert werden soll, schmieren.

Das Trennelement 32 trennt den Rotorraum 30 von dem Schmierungsraum 80. Der Laufradraum 60 ist über das Trennelement 32 von dem Rotorraum 30 getrennt. Bei Förderung einer Flüssigkeit über Rotation des Laufrads 62 wird die Flüssigkeit nicht durch den Spalt 28 durchgepumpt. Dadurch ist das Problem vermieden, dass magnetische Partikel sich in dem Spalt 28 anlagern können und zu einer Blockade führen können.

Die Schmiermittelförderung durch den Schmierungsraum 80 erfolgt allein durch den Laufradraum 60 hindurch ohne Beteiligung des Rotorraums 30.

Grundsätzlich kann bei der Umwälzpumpe 10 Flüssigkeit in die Ausnehmung 44 über den Ringkanal 72 eintreten. Da die Flüssigkeit aber auf dem gleichen Druckniveau liegt wie die Flüssigkeit in dem Spalt 28, kann dadurch eine verringerte Anzahl an magnetischen Partikeln in den Rotorraum 30 eindringen.

Das Trennelement 32 ist aus einem wärmeleitfähigen Material und insbesondere metallischen Material hergestellt, um Wärme von dem Stator 14 über den Rotorraum 30 in den Laufradraum 60 und von dort mittels Förderflüssigkeit abführen zu können.

Bei einer Variante eines Ausführungsbeispiels ist das Trennelement 32 mit einer Rippenstruktur 84 versehen, welche dem Laufradraum 60 zugewandt ist. Die Rippenstruktur 84 erhöht die Oberfläche des Trennelements 32 und damit die wärmeabgebende Fläche. Es ist auch möglich, dass eine Rippenstruktur in Richtung des Rotorraums 30 angeordnet ist.

Grundsätzlich ist es günstig, wenn der Spalt 28 mit Flüssigkeit befüllt ist, um einen höheren Wärmeübergang zu dem Trennelement 32 zu ermöglichen. Beispielsweise ist der Rotorraum 30 vorbefüllt (beispielsweise mit einer Wasser-Glykol-Mischung).

Die erfindungsgemäße Lösung funktioniert wie folgt:

Der Rotor 16 wird durch die elektromagnetische Wechselwirkung mit dem Stator 14, wenn dieser mit Strom beaufschlagt wird, elektromotorisch angetrieben. Er rotiert um die Drehachse 18. Über das Wellenelement 48 ist das Laufrad 62 drehfest mit dem Rotor 16 verbunden, so dass durch die Rotordrehung das Laufrad 62 angetrieben wird und dadurch eine Druckdifferenz zur Flüssigkeitsförderung erzeugt wird.

Der Rotor 16 ist über die Lagereinrichtung 82 drehbar gelagert. Das Wellenelement 48 durchdringt den Lagerkörper 38. Der Lagerkörper 38 liegt zwischen der Lagerschale 64 und dem Verbindungsbereich 50 mit dem Rotor 16. Der Rotor 16 ist gewissermaßen von oben an der Lagereinrichtung 82 abgestützt. Diese Abstützung "von oben" ist durch das Wellenelement 48 ermöglicht, welches den Lagerkörper 38 durchdringt.

Dadurch ist es möglich, über das Trennelement 32 den Rotorraum 30 von dem Schmierungsraum 80 flüssigkeitsdicht zu trennen oder zumindest so zu trennen, dass das Eindringen von magnetischen Partikeln (welche in der Förderflüssigkeit enthalten sein können) in den Rotorraum 30 verhindert ist. Durch das Trennelement 32 steht der Schmierungsraum 80 in direktem fluidwirksamen Kontakt mit dem Laufradraum 60 und steht nicht in direktem fluidwirksamen Kontakt mit dem Rotorraum 30. Schmiermittel (Förderflüssigkeit) muss dadurch nicht in dem Spalt 28 strömen.

Zumindest eine "ungebremste" Durchströmung von Förderflüssigkeit (Schmiermittel) durch den Spalt 28 ist nicht mehr möglich. Dadurch können sich auch keine magnetischen Partikel mehr an dem Rotor 16 anlagern bzw. diese Anlagerung ist stark verhindert.

Der Rotor 16 und die Lagereinrichtung 82 bilden eine Kombination. Bei einem Rotorwechsel wird die gesamte Kombination aus Rotor und Lagereinrichtung ausgetauscht.

Schmiermittel durchströmt den Schmierungsraum 80 und folgt dabei der durch Rotation des Laufrads 62 erzeugten Druckdifferenz. In Figur 1 ist der Schmiermittelfluss durch Pfeile angedeutet. Dieser Schmiermittelfluss erfolgt unter Umgehung des Rotorraums 30.

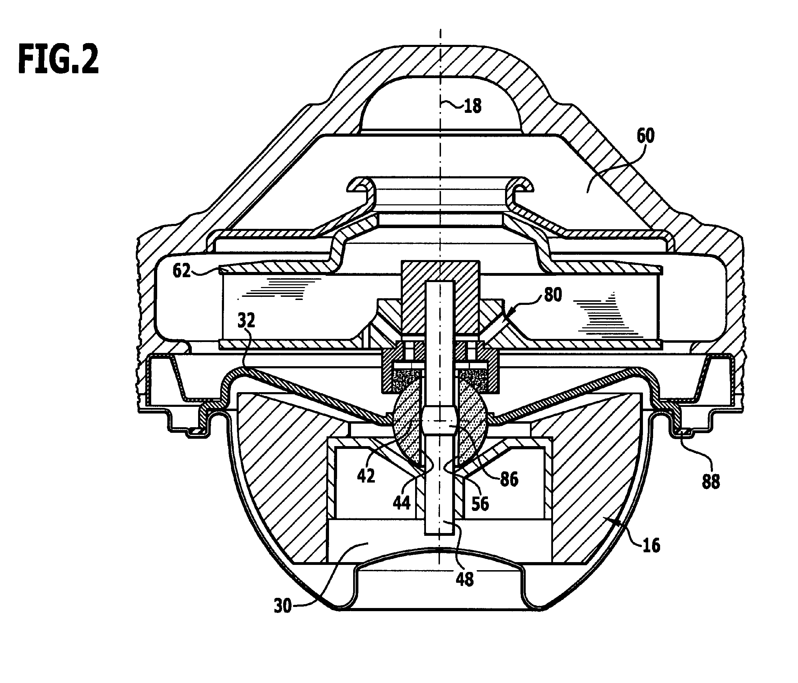

Bei einer Variante der Umwälzpumpe 10, welche in Figur 2 in einer Schnittansicht schematisch gezeigt ist, wobei für gleiche Elemente gleiche Bezugszeichen verwendet werden, ist in der Ausnehmung 44 zwischen der Wand 56 und dem Wellenelement 48 eine Dichtung 86 angeordnet, welche den Fluss an Förderflüssigkeit (und damit auch Schmiermittel) von dem Schmierungsraum 80 bzw. von dem Laufradraum 60 in den Rotorraum 30 völlig unterbindet.

Bei dem gezeigten Ausführungsbeispiel ist die Dichtung 86 auf dem Wellenelement 48 beispielsweise in der Nähe der Äquatorialebene 42 angeordnet. Die Dichtung 86 ist dabei so ausgebildet, dass eine Rotation des Wellenelements 48 um die Drehachse 18 möglich ist, wobei sie mit dem Wellenelement 48 rotiert und insbesondere drehfest an diesem angeordnet ist.

Wenn eine vollständige Flüssigkeitsdichtigkeit des Rotorraums 30 erreicht werden soll, dann ist vorzugsweise auch das Trennelement 32 über eine Dichtung 88 beispielsweise in Form eines O-Rings gegenüber der Trennkalotte 22 angeordnet, um in diesem Bereich keinen Flüssigkeitsdurchgang zu ermöglichen.

Um eine gute Wärmeabfuhr beim Betrieb der entsprechenden Umwälzpumpe zu erhalten, ist dann vorzugsweise der Spalt 28 und alle anderen Zwischenräume im Rotor 16 durch eine Flüssigkeit wie beispielsweise eine Wasser-Glykol-Mischung vorbefüllt.

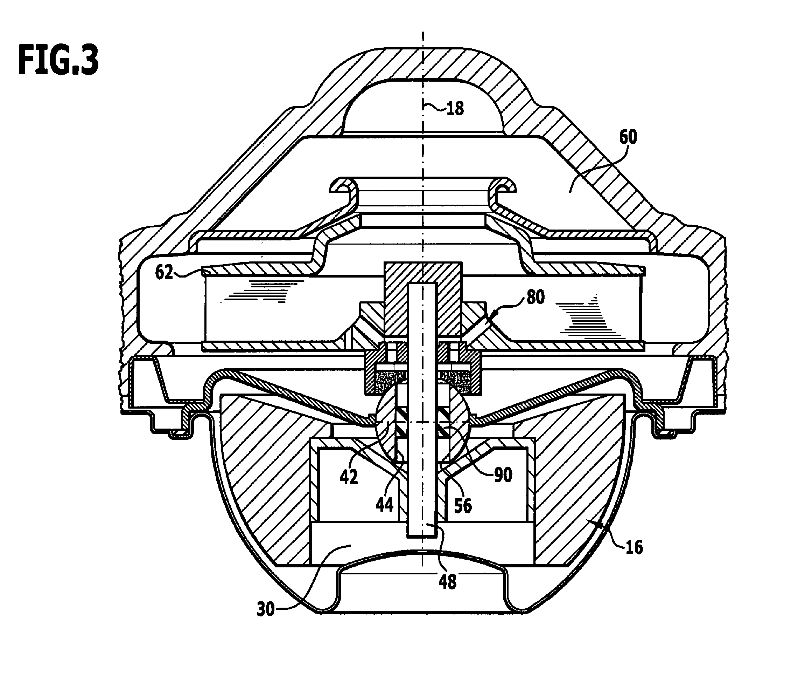

Bei einer weiteren Variante, welche in Figur 3 schematisch gezeigt ist, ist in der Ausnehmung 44 eine stationäre Dichtung 90 angeordnet, welche an der Wand 56 fixiert ist. Das Wellenelement 48 rotiert relativ zu dieser Dichtung 90.

Die Umwälzpumpen gemäß den Figuren 2 und 3 funktionieren ansonsten wie die Umwälzpumpe gemäß Figur 1.

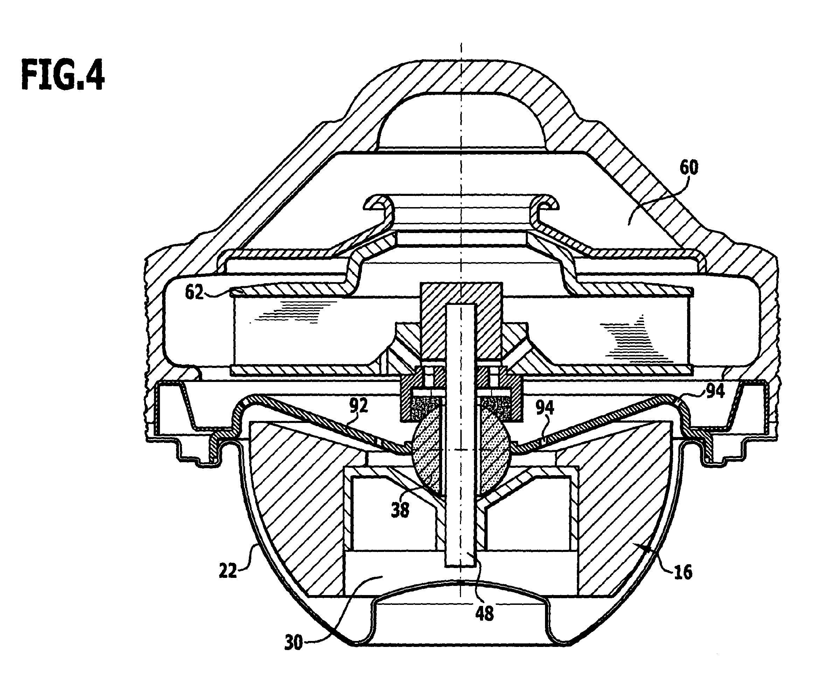

Bei einer weiteren Variante der Umwälzpumpe 10, welche in Figur 4 schematisch gezeigt ist, wobei für gleiche Elemente gleiche Bezugszeichen verwendet werden, ist anstatt des Trennelements 32, welches flüssigkeitsdicht angeordnet und ausgebildet ist, ein Trennelement 92 vorgesehen, welches eine oder mehrere Öffnungen 94 von dem Laufradraum 60 in den Rotorraum 30 aufweist. Die Öffnungen 94 weisen dabei einen Durchmesser auf, welcher genügend klein ist, so dass magnetische Partikel mit einer bestimmten kritischen Größe nicht in den Rotorraum 30 eindringen können. Beispielsweise ist der Durchmesser einer solchen Öffnung 94 höchsten 0,3 mm groß und insbesondere beträgt dieser Durchmesser höchstens 0,2 mm. Eine Öffnung 94 wird beispielsweise durch Laserbearbeitung hergestellt.

Durch eine Öffnung 94 ist ein Eintritt von Förderflüssigkeit und damit eine Förderflüssigkeitsbefüllung (Erstbefüllung) des Rotorraums 30 ermöglicht. Dadurch lässt sich eine verbesserte Kühlwirkung erzielen, um Wärme von dem Rotor 16 besser abführen zu können. Weiterhin ist dann eine werkseitige Vorbefüllung des Rotorraums 30 nicht notwendig.

Die Öffnung oder Öffnungen 94 sind bevorzugterweise dort angeordnet, wo die Druckdifferenz zwischen dem Laufradraum 60 und dem Rotorraum 30 minimiert ist. Beispielsweise ist eine oder sind mehrere Öffnungen 94 in der Nähe des Lagerkörpers 38 angeordnet.

Es ist auch möglich, dass an dem Trennelement 92 eine größere Öffnung angeordnet ist, an welcher dann wiederum ein Filterelement angeordnet ist, welches größere magnetische Partikel (beispielsweise einer Größe von 0,2 mm oder mehr) ausfiltert.

Ansonsten funktioniert die Umwälzpumpe wie oben beschrieben.

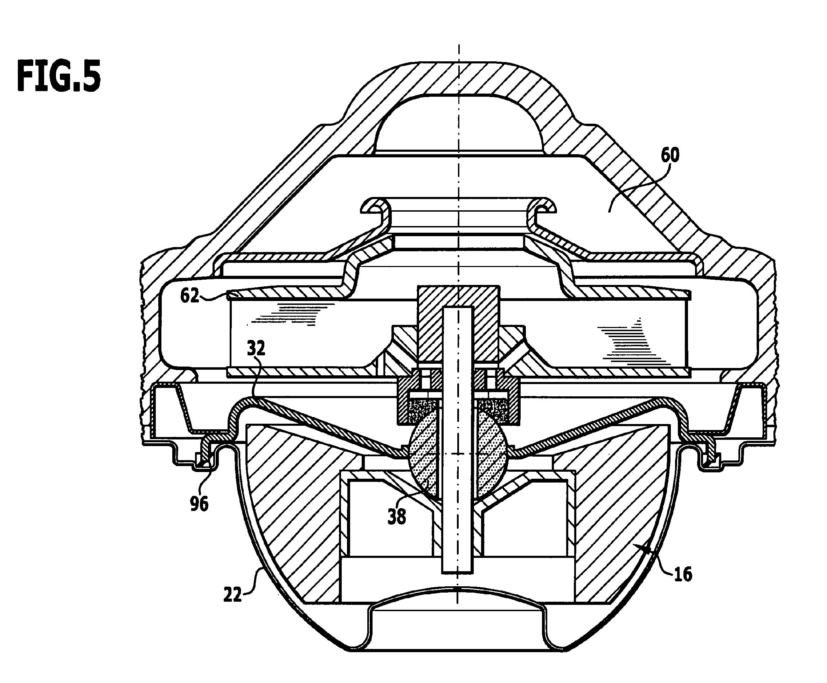

Bei einer weiteren Variante der Umwälzpumpe 10, welche schematisch in Figur 5 gezeigt ist, ist das Trennelement 32 über ein Beeinflussungselement 96 gelagert an der Trennkalotte 22 oder direkt an dem Stator 14 angeordnet. Das Beeinflussungselement 96 dient zur Beeinflussung der Eigenfrequenzen des rotierenden Systems aus Rotor 16 und Laufrad 62. Das Beeinflussungselement 96 ist beispielsweise ein ringförmiges Gummilager. Es dient zur Entkopplung und insbesondere Vibrationsentkopplung des Trennelements 32 von dem Stator 14.

Durch entsprechende Wahl des Beeinflussungselements 96 lässt sich eine Geräuschoptimierung erreichen. Beispielsweise lässt sich eine Haupteigenfrequenz in einen Frequenzbereich deutlich unterhalb 600 Hz setzen.

Es ist dabei grundsätzlich möglich, die Eigenfrequenzen auch über entsprechende Ausbildung des Trennelements 92 zu beeinflussen. Beispielsweise kann das Trennelement 92 durch eine Verrippung versteift werden.

Durch das Beeinflussungselement 96 lässt sich gezielt das Eigenfrequenzspektrum der Umwälzpumpe 10 beeinflussen und in einen gewünschten Bereich mindestens bezüglich der stärksten Eigenmode bringen.

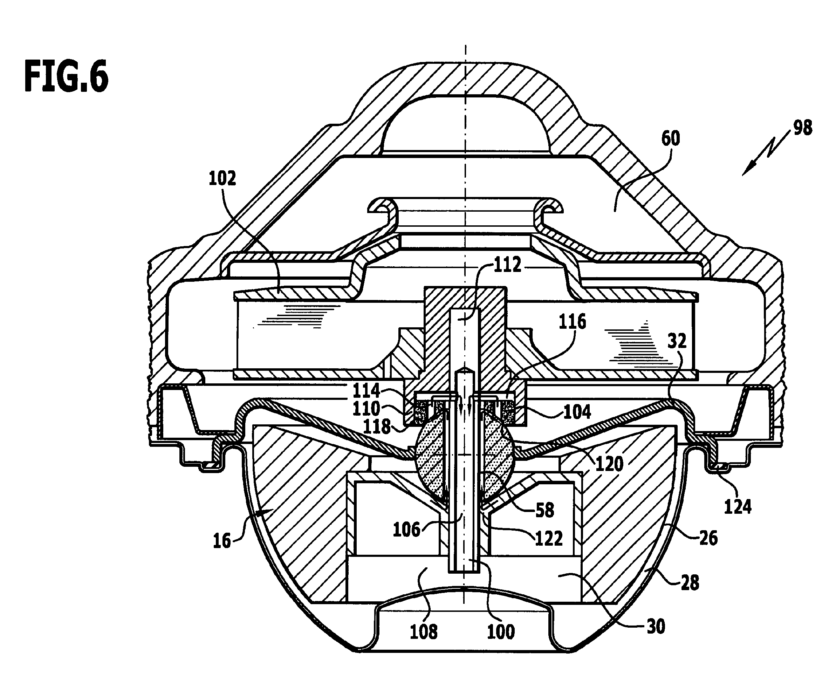

Ein zweites Ausführungsbeispiel einer erfindungsgemäßen Umwälzpumpe, welches in einer Schnittansicht schematisch in Figur 6 gezeigt und dort mit 98 bezeichnet ist, umfasst einen Stator und einen Rotor, welche grundsätzlich gleich aufgebaut sind wie bei der Umwälzpumpe 10. Für gleiche Elemente werden gleiche Bezugszeichen verwendet. Es ist wiederum eine Lagereinrichtung mit einem Lagerkörper 38 vorgesehen, welcher eine durchgehende Ausnehmung 44 aufweist. Dieser Lagerkörper 38 ist über einen Halter 36 gehalten, welcher einen Rotorraum 30 von einem Laufradraum 60 trennt und insbesondere flüssigkeitsdicht trennt.

Durch die Ausnehmung 44 ist ein Wellenelement 100 geführt, welches drehfest mit dem Rotor 16 verbunden ist. Das Wellenelement 100 ist ferner drehfest mit einem Laufrad 102 verbunden, wobei die Anordnung grundsätzlich gleich ist wie im Zusammenhang mit der Umwälzpumpe 10 beschrieben.

Die entsprechende Lagereinrichtung umfasst eine konkave Lagerschale 104, welche auf den Lagerkörpers 38 aufgesetzt ist.

An dem Wellenelement 100 ist ein Kanal 106 angeordnet, welcher parallel zu einer Längserstreckungsrichtung des Wellenelements 100 ist. Im Bereich des Kanals 106 weist das Wellenelement 100 einen Hohlraum auf.

Der Kanal 106 mündet in den Rotorraum 30, wobei er in einen Hohlraum 108, welcher ein Teilraum des Rotorraums 30 ist, mündet.

Die Lagerschale 104 wiederum ist über ein Verbindungselement 110 an dem Laufrad 102 gehalten. Das Verbindungselement 110 ist dabei so ausgebildet, dass ein Schmierungsraum 112 zur Flüssigschmierung der entsprechenden Lagereinrichtung nicht in fluidwirksamer Verbindung mit dem Laufradraum 60 steht.

In der Lagerschale 104 sind ein oder mehrere Kanäle 114 angeordnet, welche mindestens näherungsweise axial orientiert sind. Sie münden in einer Richtung in einen Oberflächenbereich der Lagerschale 104, mit welchem diese auf dem Lagerkörper 38 aufgesetzt ist. An ihrem anderen Ende münden der oder die Kanäle 114 in einen Ringraum 116, wobei der Ringraum wiederum in fluidwirksamer Verbindung mit dem Kanal 106 in dem Wellenelement 100 steht. Anstatt eines Ringraums 116 kann auch eine Mehrzahl von Kanälen vorgesehen sein, welche den Kanal 106 des Wellenelements 100 mit dem oder den Kanälen 114 verbinden.

Die Lagerschale 104 weist einen sphärischen Bereich 118 auf, welcher zwischen dem Laufradraum 60 und einem Mündungsbereich des oder der Kanäle 114 angeordnet ist. Dieser sphärische Bereich 118 ist so ausgebildet, dass der oder die Kanäle 114 fluiddicht gegenüber dem Laufradraum 60 abgetrennt sind, d. h. der sphärische Bereich 118 ist als Dichtungsbereich ausgebildet.

Ferner weist die Lagerschale 104 einen sphärischen Bereich 120 auf, welcher sich zwischen dem Mündungsbereich des oder der Kanäle 114 und dem Spalt 58 zwischen der Ausnehmung 44 und einer Außenkontur des Wellenelements 100 erstreckt. Über diesen sphärischen Bereich 120 ist ein Strömungspfad für Förderflüssigkeit als Schmiermittel gebildet.

Der Spalt 28 zwischen der Ausnehmung 44 und der Außenkontur des Wellenelements 100 mündet in einen Bereich 122 des Rotorraums 30. Dadurch kann in den Spalt 58 Schmierflüssigkeit aus dem Rotorraum 30 eindringen.

Der Schmierungsraum 112 ist von dem Laufradraum 60 entkoppelt. Es lässt sich eine "interne Schmierung" der Lagereinrichtung realisieren, welche getrennt ist von dem Transport des Fördermediums.

Über den rotierenden Rotor 16 ist in dem Rotorraum 30 eine Friktionspumpe gebildet. Dazu ist das Trennelement 32 über eine Dichtung 124 abgedichtet, so dass kein Flüssigkeitsaustausch mit dem Laufradraum 60 erfolgen kann.

Durch die Friktionspumpe (Reibungspumpe) ergibt sich im Bereich des Spalts 58 ein Druck p₁, welcher größer ist als ein Druck p₂ in dem Hohlraum 108. Dadurch wird Schmiermittel (Flüssigkeit) bewegt. Diese dringt durch den Spalt 28 in die Ausnehmung 44 und über den sphärischen Bereich 120 und den oder die Kanäle 114 in den Ringraum 116. Sie strömt dann durch den Kanal 106 in den Hohlraum 108. Der Hohlraum 108 wiederum steht in fluidwirksamer Verbindung mit dem Spalt 58. Es entsteht dadurch ein Strömungskreislauf, in welchem Schmierflüssigkeit zwischen der Lagerschale 104 und dem Lagerkörper 38 durchtransportiert wird, wobei durch die Ausbildung des sphärischen Bereichs 118 kein Austausch mit dem Laufradraum 60 erfolgen kann.

Dadurch ist dann auch verhindert, dass magnetische Partikel in den Rotorraum 30 eindringen können oder abrasive Partikel in den Schmierungsraum eindrangen können.

Zur Ausbildung dieses internen Schmiermittelkreislaufs ist eine Erstbefüllung beispielsweise durch ein Wasser-Glykol-Gemisch notwendig.

Ansonsten funktioniert die Umwälzpumpe 98 wie die Umwälzpumpe 10.

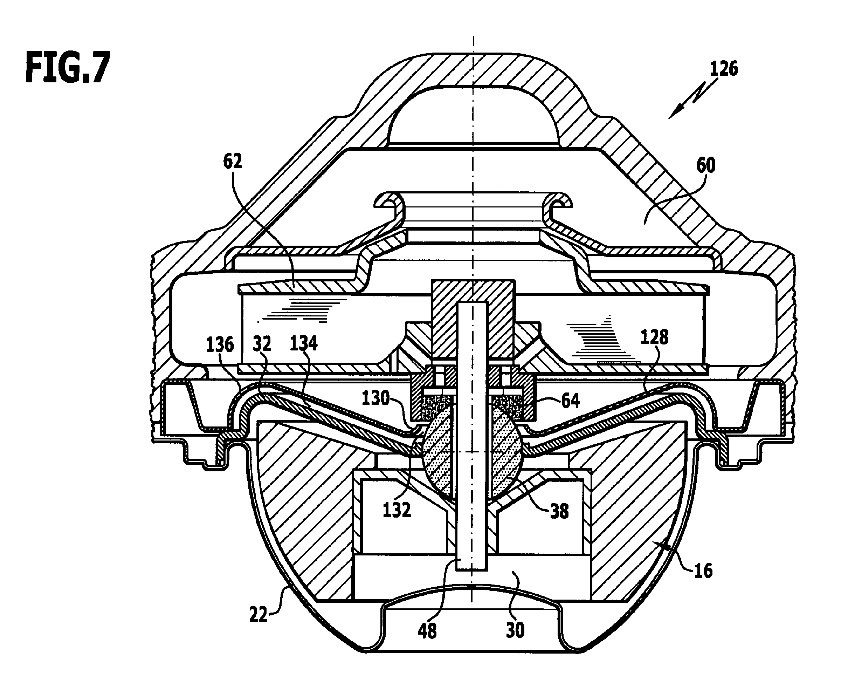

Ein drittes Ausführungsbeispiel einer erfindungsgemäßen Umwälzpumpe, welches in Figur 7 schematisch in einer Schnittdarstellung gezeigt und dort mit 126 bezeichnet ist, ist grundsätzlich gleich ausgebildet wie die Umwälzpumpe 10. Für gleiche Elemente werden gleiche Bezugszeichen verwendet.

Oberhalb des Trennelements 32 ist ein weiteres Trennelement 128 beispielsweise in Form eines Trennblechs angeordnet. Dieses weitere Trennelement 128 folgt in der Form dem Trennelement 32, wobei es den Lagerkörper 38 nicht berührt. Im Bereich des Lagerkörpers 38 weist das Trennelement 128 einen Bereich 130 auf, welcher den Lagerkörper 38 umgibt. Der Bereich 130 umgibt dabei eine Mittelöffnung 132 des Trennelements 128, über welche der Lagerkörper 38 mit Fluid beaufschlagbar ist und insbesondere anspritzbar ist.

Zwischen dem weiteren Trennelement 128 und dem Trennelement 32 (welches den Halter für den Lagerkörper 38 bildet) ist (mindestens) ein Fluidkanal 134 gebildet. Insbesondere bildet der Zwischenraum zwischen dem Trennelement 128 und dem Trennelement 32 einen zusammenhängenden Fluidkanal.

An dem Trennelement 128 sind in einem Außenbereich eine oder mehrere Öffnungen 136 angeordnet, über welche eine fluidwirksame Verbindung zwischen dem mindestens einen Fluidkanal 134 und dem Laufradraum 60 erreicht ist. Über die Öffnung oder Öffnungen 136 kann Förderflüssigkeit in den mindestens einen Fluidkanal 134 eindringen.

Die Öffnung 136 ist in einem Bereich angeordnet, in welchem der Druck in der Förderflüssigkeit größer ist als um den Lagerkörper 38. Dadurch lässt sich, wie oben erwähnt, eine direkte Beaufschlagung des Lagerkörpers 38 zwischen der Lagerschale 104 und dem Verbindungsbereich mit dem Trennelement 32 mit Förderflüssigkeit erreichen. Dadurch lässt sich eine Notschmierung realisieren bzw. die Schmierung der entsprechenden Lagereinrichtung lässt sich verbessern. Es lässt sich auch eine Schmierung realisieren, wenn die Förderflüssigkeit einen hohen Gasanteil enthält, da Förderflüssigkeit als Schmiermittel aufspritzbar ist.

Ansonsten funktioniert die Umwälzpumpe 126 wie die Umwälzpumpe 10.

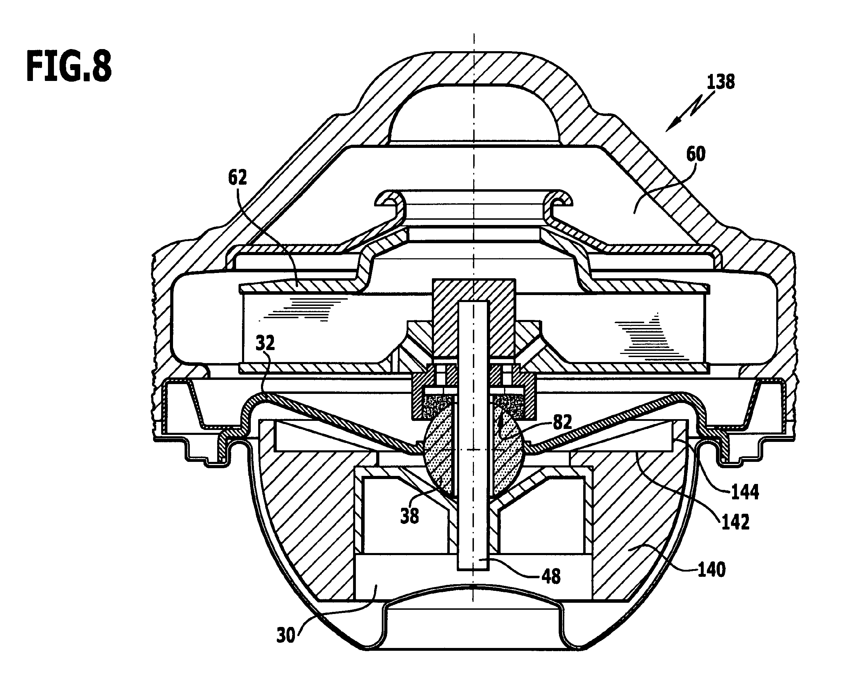

Ein viertes Ausführungsbeispiel einer erfindungsgemäßen Umwälzpumpe, welches in Figur 8 schematisch gezeigt und dort mit 138 bezeichnet ist, ist grundsätzlich gleich ausgebildet wie die Umwälzpumpe 10. Für gleiche Elemente werden gleiche Bezugszeichen verwendet.

Die Umwälzpumpe 138 unterscheidet sich von der Umwälzpumpe 10 in der Ausbildung des Rotors. Es ist ein Rotor 140 vorgesehen, welcher einen Bereich 142 mit einer Schaufelstruktur 144 aufweist. Die Schaufelstruktur 144 ist dabei unterhalb des Trennelements 32 angeordnet und diesem zugewandt.

Die Schaufelstruktur 144 umfasst eine Mehrzahl von Flügelprofilen bzw. Rippen, welche mit der Rotation des Rotors 140 in dem Rotorraum 30 rotieren. Die entsprechenden Profile sind so ausgebildet, dass die Schaufelstruktur 144 eine Axialkraft beeinflusst, welche auf die Kombination aus Laufrad 62 und Rotor 140 wirkt.

Durch die Rotation des Laufrads 62 in dem Laufradraum 60 übt Förderflüssigkeit eine axial wirkende hydraulische Kraft auf das Laufrad 62 aus, welche von dem Stator 14 weg gerichtet ist. Diese Kraft hat die Tendenz, die Lagerschale 64 von dem Lagerkörper 38 abzuheben. Bei größeren Förderhöhen besteht grundsätzlich die Gefahr, dass das Laufrad 62 abhebt.

In Hohlräumen des Rotors 140, welche fluidwirksam zusammenhängen, befindet sich Flüssigkeit. Es kann sich dabei um Förderflüssigkeit handeln, welche allmählich beim Betrieb eindringt und die Befüllung bewirkt, oder es kann sich um eine Vorbefüllung handeln. Durch die Schaufelstruktur 144 an dem Rotor 140 erfolgt in dem Rotorraum 30 eine Druckerhöhung, welche einen Haltekraftanteil in axialer Richtung erzeugt, wobei diese Axialkraft auf den Stator 14 zu wirkt. Dadurch wird zusätzlich zu der magnetischen Haltekraft zwischen dem Rotor 16 und dem Stator 14 (und insbesondere einem Eisenanteil des Stators 14) über die Rotorbeschaufelung eine mechanische Haltekraft erzeugt, welche die Abhebegefahr verringert.

Ansonsten funktioniert die Umwälzpumpe 138 wie oben beschrieben.

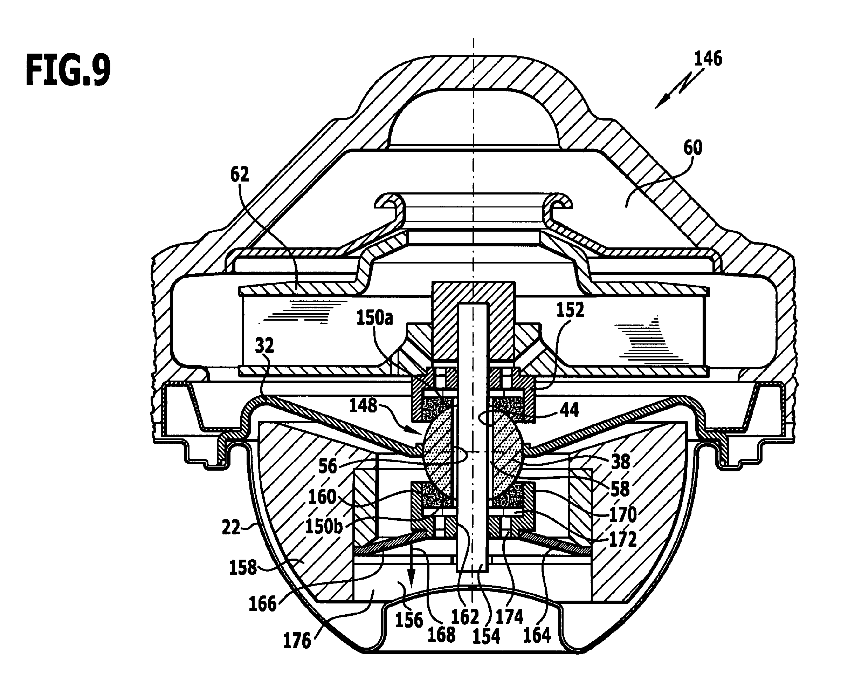

Ein fünftes Ausführungsbeispiel einer erfindungsgemäßen Umwälzpumpe, welches in Figur 9 in einer Schnittdarstellung schematisch gezeigt und dort mit 146 bezeichnet ist, umfasst eine Lagereinrichtung 148 mit einem konvexen Lagerkörper. Für gleiche Elemente wie bei der Umwälzpumpe 10 werden gleiche Bezugszeichen verwendet. Der Lagerkörper wird deshalb mit 38 bezeichnet. An einem ersten Polbereich 150a ist auf dem Lagerkörper 38 eine sphärisch konkave erste Lagerschale 152 gelagert. Die erste Lagerschale 152 ist in einem Laufradraum 60 positioniert, welcher grundsätzlich gleich ausgebildet ist wie der Laufradraum 60 der Umwälzpumpe 10. In diesem Laufradraum 60 dreht sich ein Laufrad 62.

Der Lagerkörper 38 weist eine Ausnehmung 44 auf, durch welche ein Wellenelement 154 geführt ist, welches drehfest mit dem Laufrad 62 verbunden ist.

Der Laufradraum 60 ist von einem Rotorraum 156 getrennt, in welchem ein Rotor 158 rotierbar angeordnet ist. Ein Trennelement 32, welches dem Trennelement 32 der Umwälzpumpe 10 entspricht, trennt den Rotorraum 156 von dem Laufradraum 60. Es hält auch den konvexen Lagerkörper 38.

In dem Rotorraum 156 ist eine sphärisch konkave zweite Lagerschale 160 angeordnet, welche sich an einem zweiten Polbereich 150b des konvexen Lagerkörpers 38 abstützt. Der erste Polbereich 150a und der zweite Polbereich 150b liegen sich dabei axial gegenüber.

Das Wellenelement 154 durchdringt eine Ausnehmung 162 der zweiten Lagerschale 160 und ist mit dem Rotor 158 drehfest verbunden.

Die zweite Lagerschale 160 ist an dem Rotor 158 durch eine Federeinrichtung 164 abgestützt. Die Federeinrichtung 164 ist insbesondere durch eine Tellerfeder 166 oder durch ein Tellerfederpaket gebildet. Tellerfedern haben den Vorteil, dass ihre Kennlinie definiert einstellbar ist.

Die Federeinrichtung 164 ist so ausgebildet, dass sie eine Vorspannungskraft auf die zweite Lagerschale 160 in axialer Richtung auf den Stator (in Figur 9 nicht gezeigt) ausübt. Die Kraftrichtung ist in Figur 9 durch das Bezugszeichen 168 angedeutet.

Die zweite Lagerschale 160 ist an dem Rotor 158 durch ein Verbindungselement 170 drehfest gehalten. Das Verbindungselement 170 ist beispielsweise becherförmig ausgebildet und die zweite Lagerschale 160 ist in einem Innenraum des Verbindungselements 170 fixiert. Zwischen dem Verbindungselement 170 und einer Rückseite der zweiten Lagerschale 160, welche einem sphärischen Bereich der zweiten Lagerschale abgewandt ist, ist ein Ringkanal 172 gebildet, welcher in fluidwirksamer Verbindung mit dem Spalt 28 zwischen dem Wellenelement 154 und der Wand 56 der Ausnehmung 44 steht.

Von dem Ringkanal 172 führen ein oder mehrere Kanäle 174 durch das Verbindungselement 170 hindurch in einen Hohlraum 176 des Rotorraums 156. Dadurch steht der Ringkanal 172 in fluidwirksamer Verbindung mit dem Rotorraum 156.

Die erste Lagerschale 152, welche konkav ausgebildet ist, weist eine sphärische Gleitfläche auf, über welche sie auf dem sphärischen konvexen Lagerkörper 38 gelagert ist. Förderflüssigkeit dient als Schmiermittel für diese Lagerung, wobei der Schmiermittelpfad der gleiche ist wie im Zusammenhang mit der Umwälzpumpe 10 beschrieben.

Die zweite Lagerschale 160 weist ebenfalls einen konkaven sphärischen Gleitbereich auf, mit welchem sie auf dem zweiten Polbereich 150b des konvexen sphärischen Lagerkörpers 38 sitzt. Diese Lagerung wird durch Flüssigkeit aus dem Rotorraum 156 als Schmiermittel geschmiert, welches in einem Strömungspfad durch den Spalt 28 strömen kann.

Die Federeinrichtung 164 ist so eingestellt, dass sie eine Vorspannungskraft in Richtung des Stators ausübt, welche beispielsweise in der Größenordnung von 10 N liegt. Diese Vorspannungskraft ist Teil einer axialen Haltekraft, welche ein Abheben des Laufrads 62 bei großen Förderhöhen verhindert. Durch das Vorsehen einer elastischen Federeinrichtung 164 ist der Lagerkörper 38 zwischen der ersten Lagerschale 152 und der zweiten Lagerschale 160 nicht fest "starr" eingespannt, sondern es ist eine axiale Nachgiebigkeit realisiert. Dadurch ist der Einbau erleichtert und die Toleranzanforderungen für die Herstellung der Umwälzpumpe 146 sind verringert.

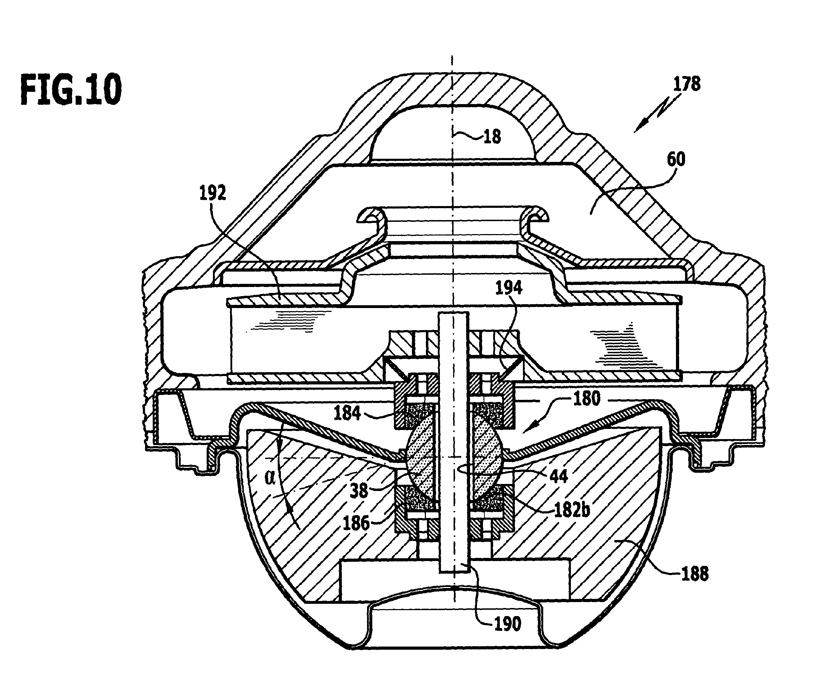

Ein sechstes Ausführungsbeispiel einer erfindungsgemäßen Umwälzpumpe; welches in Figur 10 schematisch in einer Schnittdarstellung gezeigt und dort mit 178 bezeichnet ist, umfasst eine Lagereinrichtung 180 mit einem sphärischen Lagerkörper 38, an welchem in einem ersten Polbereich 182a eine erste konkave Lagerschale 184 aufgesetzt ist. An einem gegenüberliegenden zweiten Polbereich 182b ist eine konkave zweite Lagerschale 186 angeordnet, welche auf dem Lagerkörper 38 gleitet.

Die zweite Lagerschale 186 ist drehfest mit einem Rotor 188 verbunden. Mit dem Rotor 188 drehfest verbunden ist ein Wellenelement 190, welches durch eine Ausnehmung 44 im Lagerkörper 38 durchgeführt ist, durch die erste Lagerschale 184 durchgeführt ist und drehfest mit einem Laufrad 192 verbunden ist. Das Laufrad ist wiederum in einem Laufradraum 60 rotierbar.

Die erste Lagerschale 184 ist drehfest mit dem Laufrad 192 verbunden. Die erste Lagerschale 184 ist dabei über eine Federeinrichtung 194 an dem Laufrad 192 abgestützt. Die Federeinrichtung 194 umfasst insbesondere eine Tellerfeder oder ein Tellerfederpaket. Der Abstand zwischen der ersten Lagerschale 184 und dem Laufrad 192 ist über die elastische Federeinrichtung 194 variierbar.

Die Lagerung des Rotors 188 über die zweite Lagerschale 186 an dem konvexen Lagerkörper 38 bildet ein Hauptlager für die Drehlagerung des Rotors 188. Ein Abheben des Laufrads 192 relativ zu dem Rotor 188 ist durch diese Abstützung "von unten" verhindert. Die Lagerung über die erste Lagerschale 184 übt eine Gegenkraft aus, welche die Position des Rotors 188 und damit auch die Position des Laufrads 192 axial fixiert. Über das Lager, welches mittels der ersten Lagerschale 184 und dem Lagerkörper 38 gebildet ist, lässt sich das System aus Rotor 188 und Laufrad 192 in Situationen tragen, bei denen die hydraulische Kraft kleiner ist als die magnetische Haltekraft. Die magnetische Haltekraft wirkt dabei in Richtung des Stators 14. Dies ist besonders relevant bei Start, Stopp und Stillstand:

Das Teillager, welches über die zweite Lagerschale 186 und den zweiten Polbereich 182b des Lagerkörpers 38 gebildet ist, verhindert vollständig ein Abheben des Laufrads 192 in axialer Richtung. Dadurch ist eine mechanische Abhebesicherung realisiert, so dass eine magnetische Haltekraft zur Verhinderung-der Abhebung nicht mehr notwendig ist.

Eine magnetische Haltekraft ist proportional zum Sinus α zwischen einer radialen Richtung senkrecht zur Drehachse 18 und der Wirkungsrichtung der magnetischen Haltekraft, welche wiederum durch die Zusammenwirkung zwischen dem Stator und dem Rotor 188 bestimmt ist (in Figur 10 ist der Stator nicht gezeigt). Da das oben erwähnte Hauptlager für die axiale Haltekraft sorgt, kann der Winkel α grundsätzlich beliebig klein gewählt werden.

Das Drehmoment ist proportional zum cos α. Wenn der Winkel α klein gewählt wird, dann erhält man ein hohes Drehmoment.

Durch die Umwälzpumpe 178 können also hohe Drehmomente realisiert werden, wobei das Laufrad 192 gegen Abheben gesichert ist.

Über die "Gegenlagerung" mittels der ersten Lagerschale 184 ist der Rotor 188 und damit auch das Laufrad 192 axial fixiert. Die Federeinrichtung 194 ermöglicht es wiederum, den Einbau zu erleichtern und die Toleranzanforderungen niedrig zu halten.

Die Schmierung der Lagereinrichtung 180 erfolgt grundsätzlich über Flüssigkeit, welche durch entsprechende Kanäle und Spalte Gleitflächen der Lagereinrichtung 180 bereitstellbar ist.

Eine Variante der Umwälzpumpe 10, welche in Figur 11 schematisch gezeigt und dort mit 196 bezeichnet ist, umfasst ein Wellenelement 198, welches zurückgesetzte Bereiche 200, 202 aufweist, welche axial beabstandet sind. Die zurückgesetzten Bereiche 200, 202 sind durch ringförmige Ausnehmungen gebildet, welche koaxial zu einer Achse des Wellenelements 198 sind. Im Bereich der zurückgesetzten Bereiche 202 weist das Wellenelement 198 einen geringeren Außendurchmesser auf als außerhalb der zurückgesetzten Bereiche 202 (und insbesondere geringer als in demjenigen Teil des Wellenelements 198, welcher zwischen den zurückgesetzten Bereichen 200 und 202 liegt).

Das Wellenelement 198 taucht aus dem Lagerkörper 38 in jeweiligen Austrittsbereichen 204 und 206 aus. Die Ausnehmung 44 an dem Lagerkörper 38 weist jeweils ringförmige Kanten 208, 210 auf.

Die zurückgesetzten Bereiche 200, 202 sind jeweils an den Austrittsbereichen 204, 206 des Wellenelements 108 den Kanten 208 bzw. 210 gegenüberliegend angeordnet.

An den Kanten 208, 210 ist der Lagerkörper 38, insbesondere wenn er ein Keramikkörper ist, besonders schlagempfindlich. Durch die zurückgesetzten Bereiche 200, 202 wird ein Anschlagen des Wellenelements 198 an die schlagempfindlichen Kanten 208, 210 bei Kippung des Rotors 16 vermieden.

Es lässt sich erreichen, dass das Wellenelement 198 an die Wand 56 der Ausnehmung 44 in einem Bereich anschlägt, welcher genügend Abstand zu den Kanten 208, 210 hat.

Bei dieser Ausführungsform, die auch in allen anderen beschriebenen Umwälzpumpen verwendet werden kann, ist eine Begrenzung der Kippung des Rotors 60 durch Anschlag des Wellenelements 198 innerhalb der Ausnehmung 44 möglich.

Bei einer Variante einer Ausführungsform ist eine Lagerschale 212 vorgesehen (Figur 11), welche zu der Ausnehmung 44 einen Randbereich 214 aufweist, der eine Dichtwirkung zu der Ausnehmung 44 hat. Dadurch kann Flüssigkeit aus dem Laufradraum nicht in die Ausnehmung 44 und damit in den Rotorraum 30 eindringen.

Über diesen Randbereich 214 (Innenrand) gleitet die Lagerschale 212 auf der Lagerkugel 38. Dieser Randbereich 214 kann nur an der sphärischen Auflagefläche auf dem Lagerkörper 38 verschleißen. Er bildet dann auch, wenn keine Schmierung oder nur eine geringe Schmierung vorhanden ist, ein relativ dichtes Abschlusselement zu der Ausnehmung 44 und damit zu dem Rotorraum 30 hin.

Der Randbereich 214 bildet einen durchgehenden Bereich zur flüssigkeitsdichten Abgrenzung des Rotorraums 30 von dem Laufradraum 60 an der Ausnehmung 44.

In Figur 11 ist schematisch ein Strömungspfad 216 für Förderflüssigkeit als Schmiermittel für die entsprechende Lagereinrichtung gezeigt. Das Schmiermittel strömt zwischen der Lagerkugel 38 und einem Außenbereich der Lagerschale 212 in einen oder mehrere Kanäle 218. Der Randbereich 214 sorgt für eine Abdichtung zu der Ausnehmung 44.

Ansonsten funktioniert die Umwälzpumpe 196 wie oben beschrieben.

## Patentansprüche

1. Umwälzpumpe, umfassend einen Stator (14), einen Rotor (16; 140; 158; 188), eine Lagereinrichtung (82; 148; 180) mit einem konvexen Lagerkörper (38) und mindestens einer konkaven Lagerschale (64; 104; 152, 160; 184, 186; 212), über welche der Rotor (16; 140; 158; 188) drehbar gelagert ist, und ein Laufrad (62; 102; 192), welches drehfest mit dem Rotor (16; 140; 158; 188) verbunden ist,
**dadurch gekennzeichnet , dass** ein Wellenelement (48; 100; 154; 190; 198) drehfest mit dem Rotor (16; 140; 158; 188) und drehfest mit dem Laufrad (62; 102; 192) verbunden ist und dass das Wellenelement (48; 100; 154; 190; 198) durch den Lagerkörper (38) durchgeführt ist und relativ zu dem Lagerkörper (38) drehbar ist.

2. Umwälzpumpe nach Anspruch 1, **dadurch gekennzeichnet, dass** der Lagerkörper (38) eine Ausnehmung (44) aufweist, in welcher das Wellenelement (48; 100; 154; 190; 198) positioniert ist.

3. Umwälzpumpe nach Anspruch 2, **dadurch gekennzeichnet, dass** das Wellenelement (48; 100; 154; 190; 198) einen größten Außendurchmesser aufweist, welcher kleiner ist als ein kleinster Innendurchmesser der Ausnehmung (44).

4. Umwälzpumpe nach Anspruch 2 oder 3, **dadurch gekennzeichnet, dass** das Wellenelement (198) im Bereich eines Austrittsbereichs (204; 206) durch die Ausnehmung (44) einen zurückgesetzten Bereich (200; 202) mit verringertem Durchmesser aufweist.

5. Umwälzpumpe nach einem der vorangehenden Ansprüche, **dadurch gekennzeichnet**, das das Wellenelement (48; 100; 154; 190; 198) mindestens in einem Teilbereich zylindrisch ausgebildet ist.

6. Umwälzpumpe nach einem der vorangehenden Ansprüche, **dadurch gekennzeichnet, dass** der Lagerkörper (38) zwischen einer Lagerschale (64; 104; 152; 184), welche an dem Laufrad (62; 102; 192) fixiert ist, und einem Fixierungsbereich des Wellenelements (48; 100; 154; 190; 198) an dem Rotor (16; 140; 158; 188) angeordnet ist.

7. Umwälzpumpe nach einem der vorangehenden Ansprüche, **dadurch gekennzeichnet, dass** der Lagerkörper (38) durch einen Halter (36) drehfest gehalten ist, welcher oberhalb des Rotors (16; 140; 158; 188) dem Laufrad (62; 102; 192) zugewandt angeordnet ist.

8. Umwälzpumpe nach einem der vorangehenden Ansprüche, **gekennzeichnet durch** einen Rotorraum (30), in welchem der Rotor (16; 140; 158; 188) drehbar angeordnet ist, und einen Laufradraum (60), in welchem das Laufrad (62; 102; 192) drehbar angeordnet ist, wobei der Rotorraum (30) und der Laufradraum (60) **durch** ein Trennelement (32) voneinander getrennt sind und insbesondere **dadurch gekennzeichnet, dass** das Trennelement (32) in Höhe des Lagerkörpers (38) angeordnet ist und insbesondere, dass das Trennelement (32) als Halter (36) für den Lagerkörper (38) ausgebildet ist und insbesondere, dass die Lagerschale (64; 104; 152; 184; 212), welche drehfest mit dem Laufrad (62; 102; 192) verbunden ist und welche auf dem Lagerkörper (38) gelagert ist, bezogen auf eine axiale Richtung zwischen dem Trennelement (32) und dem Laufrad (62; 102; 192) angeordnet ist und insbesondere, dass das Trennelement (32) den Rotorraum (30) von einem Schmierungsraum (80) der Lagereinrichtung (82), **durch** welche Flüssigkeit zur Schmierung beim Betrieb der Umwälzpumpe transportiert wird, abkoppelt und insbesondere, dass das Trennelement (32) flüssigkeitsdicht ausgebildet ist oder höchstens Öffnungen zwischen dem Laufradraum (60) und dem Rotorraum (30) aufweist, deren Durchmesser höchstens 0,3 mm beträgt und insbesondere, dass das Trennelement (32) eine Rippenstruktur (84) aufweist und insbesondere, dass zwischen dem Trennelement (32) und einer den Rotor (16) umgebenden Trennkalotte (22) mindestens eine Dichtung (88) angeordnet ist, und insbesondere, dass der Rotorraum (30) mit Flüssigkeit vorbefüllt ist.

9. Umwälzpumpe nach einem der vorangehenden Ansprüche, **gekennzeichnet durch** einen Schmierungsraum (112) für die Lagereinrichtung, welcher fluidmäßig von einem Laufradraum (60), in welchem das Laufrad (102) rotiert, getrennt ist und insbesondere **dadurch gekennzeichnet, dass** das Wellenelement (100) mindestens einen Kanal (106) aufweist, über welchen Flüssigkeit vom Schmierungsraum (112) zu einem Rotorraum (30), in welchem der Rotor (16) rotiert, strömen kann und insbesondere, dass die mindestens eine Lagerschale (104) zu dem Laufradraum (60) hin abgedichtet ist und insbesondere, dass die mindestens eine Lagerschale (104) Kanäle (114, 116) aufweist, über welche Flüssigkeit, welche **durch** einen Spalt (28) an dem Lagerkörper (38) und dem Wellenelement (100) strömt, dem mindestens einen Kanal (106) des Wellenelements (100) zuführbar ist und insbesondere, dass **durch** den Rotor (16), welcher in einem Rotorraum (30) rotiert, eine Reibungspumpe gebildet ist, welche einen Schmiermittelfluss in dem Schmierungsraum (112) antreibt.

10. Umwälzpumpe nach einem der vorangehenden Ansprüche, **dadurch gekennzeichnet, dass** ein Halter (32) für den Lagerkörper (38) auf einem Beeinflussungselement (96) für die Eigenfrequenzen des rotierenden Systems gelagert ist und insbesondere, dass über das Beeinflussungselement (96) die tiefste Eigenfrequenz auf unterhalb 600 Hz eingestellt ist.

11. Umwälzpumpe nach einem der vorangehenden Ansprüche, **gekennzeichnet durch** ein weiteres Trennelement (128), welches zwischen einem Halter (36) für den Lagerkörper (38) und dem Laufrad (62) angeordnet ist und welches eine Mittelöffnung (132) aufweist, **durch** welche der Lagerkörper (38) mit Fluid beaufschlagbar ist und insbesondere, dass zwischen dem weiteren Trennelement (128) und dem Halter (36) mindestens ein Fluidkanal (134) gebildet ist und an dem weiteren Trennelement (128) mindestens eine Öffnung (136) gebildet ist, welche in einen Hochdruckbereich eines Laufradraums (60) weist.

12. Umwälzpumpe nach einem der vorangehenden Ansprüche, **dadurch gekennzeichnet, dass** an dem Rotor (140) eine Schaufelstruktur (144) angeordnet ist.

13. Umwälzpumpe nach einem der vorangehenden Ansprüche, **gekennzeichnet durch** eine erste Lagerschale (152; 184), welche an dem Lagerkörper (38) gelagert ist, und eine zweite Lagerschale (160; 186), welche an dem Lagerkörper (38) gelagert ist, wobei die erste Lagerschale (152; 184) drehfest mit dem Laufrad (62; 192) verbunden ist und die zweite Lagerschale (160; 186) drehfest mit dem Rotor (158; 188) verbunden ist und insbesondere **dadurch gekennzeichnet, dass** die erste Lagerschale (152; 184) und die zweite Lagerschale (160; 186) sich an gegenüberliegenden Polbereichen (150a, 150b; 182a, 182b) des Lagerkörpers (38) abstützen und insbesondere, dass sich ein Teilbereich des Wellenelements (154; 190), welches **durch** den Lagerkörper (38) geführt ist, zwischen der ersten Lagerschale (152; 184) und der zweiten Lagerschale (160; 186) erstreckt und insbesondere, dass das Wellenelement (154; 190) **durch** die erste Lagerschale (152; 184) und die zweite Lagerschale (160; 186) geführt ist und insbesondere, dass die zweite Lagerschale (160) über eine Federeinrichtung (164) an dem Rotor (158) abgestützt ist, und insbesondere, dass die Federeinrichtung (164) eine Zusatzkraft in Richtung des Stators (14) ausübt und insbesondere, dass die erste Lagerschale (184) über eine Federeinrichtung (194) an dem Laufrad (192) abgestützt ist.

14. Umwälzpumpe nach einem der Ansprüche 2 bis 13, **dadurch gekennzeichnet, dass** in der Ausnehmung (44) und dem Wellenelement (48) eine Dichtung (86; 90) angeordnet ist.

15. Umwälzpumpe nach einem der Ansprüche 2 bis 14, **dadurch gekennzeichnet, dass** die mindestens eine Lagerschale (212) einen Dichtungsbereich (214) zu der Ausnehmung (44) für das Wellenelement (198) aufweist.

## Claims

1. Circulating pump, comprising a stator (14), a rotor (16; 140; 158; 188), a bearing device (82; 148; 180) with a convex bearing member (38) and at least one concave bearing shell (64; 104; 152, 160; 184, 186; 212), via which the rotor (16; 140, 158; 188) is mounted for rotation, and an impeller (62; 102; 192) which is rotationally fixedly connected to the rotor (16; 140; 158, 188),
**characterized in that** a shaft element (48; 100; 154; 190; 198) is rotationally fixedly connected to the rotor (16; 140; 158; 188) and rotationally fixedly connected to the impeller (62; 102; 192), and **in that** the shaft element (48; 100; 154; 190; 198) is guided through the bearing member (38) and is rotatable relative to the bearing member (38).

2. Circulating pump in accordance with claim 1, **characterized in that** the bearing member (38) has a recess (44) in which the shaft element (48; 100; 154; 190; 198) is positioned.

3. Circulating pump in accordance with claim 2, **characterized in that** the shaft element (48; 100; 154; 190; 198) has a greatest external diameter which is smaller than a smallest internal diameter of the recess (44).

4. Circulating pump in accordance with claim 2 or 3, **characterized in that** the shaft element (198) has a recessed area (200; 202) with a reduced diameter in the region of an exit area (204; 206) through the recess (44).

5. Circulating pump in accordance with any one of the preceding claims, **characterized in that** the shaft element (48; 100; 154; 190; 198) is of cylindrical configuration in at least one section thereof.

6. Circulating pump in accordance with any one of the preceding claims, **characterized in that** the bearing member (38) is arranged between a bearing shell (64; 104; 152; 184) fixed to the impeller (62; 102; 192) and a fixing area of the shaft element (48; 100; 154; 190; 198) on the rotor (16; 140; 158; 188).

7. Circulating pump in accordance with any one of the preceding claims, **characterized in that** the bearing member (38) is held rotationally fixedly by a holder (36) which is arranged above the rotor (16; 140; 158; 188) facing the impeller (62; 102; 192).

8. Circulating pump in accordance with any one of the preceding claims, **characterized by** a rotor chamber (30) in which the rotor (16; 140; 158; 188) is arranged so as to be rotatable, and an impeller chamber (60) in which the impeller (62; 102; 192) is arranged so as to be rotatable, the rotor chamber (30) and the impeller chamber (60) being separated from one another by a separating element (32), and, in particular, **characterized in that** the separating element (32) is arranged at the level of the bearing member (38), and, in particular, **in that** the separating element (32) is configured as a holder (36) for the bearing member (38), and, in particular, **in that** the bearing shell (64; 104; 152; 184; 212) which is rotationally fixedly connected to the impeller (62; 102; 192) and which is mounted on the bearing member (38) is arranged between the separating element (32) and the impeller (62; 102; 192) with respect to an axial direction, and, in particular, **in that** the separating element (32)
decouples the rotor chamber (30) from a lubrication chamber (80) of the bearing device (82) through which fluid for lubrication during operation of the circulating pump is transported, and, in particular, **in that** the separating element (32) is configured to be fluid-tight or at the most to have openings between the impeller chamber (60) and the rotor chamber (30) with a diameter of at the most 0.3 mm, and, in particular, **in that** the separating element (32) has a rib structure (84), and, in particular, **in that** at least one seal (88) is arranged between the separating element (32) and a separating cap (22) surrounding the rotor (16), and, in particular, **in that** the rotor chamber (30) is previously filled with fluid.

9. Circulating pump in accordance with any one of the preceding claims, **characterized by** a lubrication chamber (112) for the bearing device, which is separated with respect to fluid from an impeller chamber (60) in which the impeller (102) rotates, and, in particular, **characterized in that** the shaft element (100) has at least one channel (106), via which fluid is able to flow from the lubrication chamber (112) to a rotor chamber (30) in which the rotor (16) rotates, and, in particular, **in that** the at least one bearing shell (104) is sealed in the direction of the impeller chamber (60), and, in particular, **in that** the at least one bearing shell (104) has channels (114, 116) via which fluid which flows through a gap (28) at the bearing member (38) and the shaft element (100) can be supplied to the at least one channel (106) of the shaft element (100), and, in particular, **in that** a friction pump which drives a flow of lubricant in the lubrication chamber (112) is formed by the rotor (16) which rotates in the rotor chamber (30).

10. Circulating pump in accordance with any one of the preceding claims, **characterized in that** a holder (32) for the bearing member (38) is mounted on a modulating element (96) for the characteristic frequencies of the rotating system, and, in particular, **in that** the lowest characteristic frequency is set to below 600 Hz via the modulating element (96).

11. Circulating pump in accordance with any one of the preceding claims, **characterized by** a further separating element (128) which is arranged between a holder (36) for the bearing member (38) and the impeller (62) and has a central opening (132) through which the bearing member (38) can be acted upon with fluid, and, in particular, in that at least one fluid channel (134) is formed between the further separating element (128) and the holder (36), and at least one opening (136) pointing into a high-pressure area of an impeller chamber (60) is formed at the further separating element (128).

12. Circulating pump in accordance with any one of the preceding claims, **characterized in that** a blade structure (144) is arranged on the rotor (140).

13. Circulating pump in accordance with any one of the preceding claims, **characterized by** a first bearing shell (152; 184) which is mounted on the bearing member (38) and a second bearing shell (160; 186) which is mounted on the bearing member (38), the first bearing shell (152; 184) being rotationally fixedly connected to the impeller (62; 192), and the second bearing shell (160; 186) being rotationally fixedly connected to the rotor (158; 188), and, in particular, **characterized in that** the first bearing shell (152; 184) and the second bearing shell (160; 186) are supported at oppositely located pole areas (150a, 150b; 182a, 182b) of the bearing member (38), and, in particular, **in that** a section of the shaft element (154; 190) which is guided through the bearing member (38) extends between the first bearing shell (152; 184) and the second bearing shell (160; 186), and, in particular, **in that** the shaft element (154; 190) is guided through the first bearing shell (152; 184) and the second bearing shell (160; 186), and, in particular, **in that** the second bearing shell (160) is supported on the rotor (158) via a spring device (164), and, in particular, **in that** the spring device (164) exerts an additional force in the direction of the stator (14), and, in particular, **in that** the first bearing shell (184) is supported on the impeller (192) via a spring device (194).

14. Circulating pump in accordance with any one of claims 2 to 13, **characterized in that** a seal (86; 90) is arranged in the recess (44) and the shaft element (48).

15. Circulating pump in accordance with any one of claims 2 to 14, **characterized in that** the at least one bearing shell (212) has a sealing area (214) in relation to the recess (44) for the shaft element (198).

## Revendications

1. Pompe de recirculation, comprenant un stator (14), un rotor (16 ; 140 ; 158 ; 188), un système de palier (82 ; 148 ; 180) avec un corps de palier convexe (38) et au moins une coque de palier concave (64 ; 104 ; 152 ; 160 ; 184, 186 ; 212) via lesquels le rotor (16 ; 140 ; 158 ; 188) est monté en rotation, et une roue de turbine (62 ; 102 ; 192) qui est reliée solidairement en rotation avec le rotor (16 ; 140 ; 158 ; 188),
**caractérisée en ce qu'**un élément d'arbre (48 ; 100 ; 154 ; 190 ; 198) est relié solidairement en rotation avec le rotor (16 ; 140 ; 158 ; 188) et solidairement en rotation avec la roue de turbine (62 ; 102 ; 192), et **en ce que** l'élément d'arbre (48 ; 100 ; 154 ; 190 ; 198) est passé à travers le corps de palier (38) et est capable de rotation par rapport au corps de palier (38).

2. Pompe de recirculation selon la revendication 1, **caractérisée en ce que** le corps de palier (38) comporte un évidement (44) dans lequel est positionné l'élément d'arbre (48 ; 100 ; 154 ; 190 ; 198).

3. Pompe de recirculation selon la revendication 2, **caractérisée en ce que** l'élément d'arbre (48 ; 100 ; 154 ; 190 ; 198) présente un diamètre extérieur maximum qui est plus petit qu'un diamètre intérieur minimum de l'évidement (44).

4. Pompe de recirculation selon la revendication 2 ou 3, **caractérisée en ce que** l'élément d'arbre (198) présente, dans la région de la zone de sortie (204 ; 206) à travers l'évidement (44), une région en retrait (200 ; 202) avec un diamètre réduit.

5. Pompe de recirculation selon l'une des revendications précédentes, **caractérisée en ce que** l'élément d'arbre (48 ; 100 ; 154 ; 190 ; 198) est réalisé cylindrique au moins dans une zone partielle.

6. Pompe de recirculation selon l'une des revendications précédentes, **caractérisée en ce que** le corps de palier (38) est agencé entre une coque de palier (64 ; 104 ; 152 ; 184) qui est fixée sur la roue de turbine (62 ; 102 ; 192), et une zone de fixation de l'élément d'arbre (48 ; 100 ; 154 ; 190 ; 198) sur le rotor (16 ; 140 ; 158 ; 188).

7. Pompe de recirculation selon l'une des revendications précédentes, **caractérisée en ce que** le corps de palier (38) est maintenu solidairement en rotation par un élément de maintien (36), lequel est agencé au-dessus du rotor (16 ; 140 ; 158 ; 188) et tourné vers la roue de turbine (62 ; 102 ; 192).

8. Pompe de recirculation selon l'une des revendications précédentes, **caractérisée par** une chambre de rotor (30), dans laquelle le rotor (16 ; 140 ; 158 ; 188) est agencé rotatif, et une chambre de roue de turbine (60), dans laquelle la roue de turbine (62 ; 102 ; 192) est agencée rotative, dans laquelle la chambre de rotor (30) et la chambre de roue de turbine (60) sont séparées l'une de l'autre par un élément de séparation (32), et en particulier **caractérisé en ce que** l'élément de séparation (32) est agencé à la hauteur du corps de palier (38), et en particulier **en ce que** l'élément de séparation (32) est réalisé à titre d'élément de maintien (36) pour le corps de palier (38), et en particulier **en ce que** la coque de palier (64 ; 104 ; 152 ; 184 ; 212), laquelle est reliée solidairement en rotation avec la roue de turbine (62 ; 102 ; 192) et est montée sur le corps de palier (38), est agencée, par référence à une direction axiale, entre l'élément de séparation (32) et la roue de turbine (62 ; 102 ; 192), et en particulier **en ce que** l'élément de séparation (32) découple la chambre de rotor (30) vis-à-vis d'une chambre de lubrification (80) du système de palier (82), à travers laquelle un liquide de lubrification est transporté lors du fonctionnement de la pompe de recirculation, et en particulier **en ce que** l'élément de séparation (32) est réalisé étanche aux liquides ou présente tout au plus des ouvertures entre la chambre de roue de turbine (60) et la chambre de rotor (30) dont le diamètre s'élève au maximum à 0,3 mm, et en particulier **en ce que** l'élément de séparation (32) présente une structure à nervures (84), et en particulier **en ce qu'**au moins un joint (88) est agencé entre l'élément de séparation (32) et une calotte de séparation (22) qui entoure le rotor (16), et **en ce que** la chambre de rotor (30) est préalablement remplie d'un liquide.

9. Pompe de recirculation selon l'une des revendications précédentes, **caractérisée par** une chambre de lubrification (112) pour le système de palier, laquelle est séparée sur le plan fluidique vis-à-vis d'une chambre de roue de turbine (60) dans laquelle la roue de turbine (102) est en rotation, et en particulier **caractérisée en ce que** l'élément d'arbre (100) comprend au moins un canal (106) via lequel un liquide peut s'écouler depuis la chambre de lubrification (112) jusqu'à une chambre de rotor (30) dans laquelle le rotor (16) est en rotation, et en particulier **en ce que** ladite au moins une coque de palier (104) est étanchée en direction de la chambre de roue de turbine (60), et en particulier **en ce que** ladite au moins une coque de palier (104) comporte des canaux (114, 116) via lesquels du liquide, qui s'écoule à travers une fente (28) sur le corps de palier (38) et sur l'élément d'arbre (100), peut être alimenté audit au moins un canal (106) de l'élément d'arbre (100), et en particulier **en ce qu'**au moyen du rotor (16), qui est en rotation dans une chambre de rotor (30), il se forme une pompe à friction qui entraîne un écoulement de lubrifiant vers la chambre de lubrification (112).

10. Pompe de recirculation selon l'une des revendications précédentes, **caractérisée en ce qu'**un support (32) pour le corps de palier (38) est monté sur un élément d'actionnement (96) pour la fréquence propre du système en rotation, et en particulier **en ce que** la fréquence propre la basse est réglée au moyen de l'élément d'actionnement (96) à une valeur au-dessous de 600 Hz.

11. Pompe de recirculation selon l'une des revendications précédentes, **caractérisée par** un autre élément de séparation (128), qui est agencé entre un élément de maintien (36) pour le corps de palier (38) et la roue de turbine (62) et qui comporte une ouverture centrale (132), via laquelle le corps de palier (38) peut être alimenté avec un fluide, et en particulier en ce qu'au moins un canal à fluide (134) est formé entre l'autre élément de séparation (128) et l'élément de maintien (36), et au moins une ouverture (136), qui est orientée vers une zone à haute pression d'une chambre de roue de turbine (60) est formée sur l'autre élément de séparation (128).

12. Pompe de recirculation selon l'une des revendications précédentes, **caractérisé en ce qu'**une structure à aubes (144) est agencée sur le rotor (140).

13. Pompe de recirculation selon l'une des revendications précédentes, **caractérisée par** une première coque de palier (152 ; 184) qui est montée sur le corps de palier (38), et une seconde coque de palier (160 ; 186) qui est montée sur le corps de palier (38), dans laquelle la première coque de palier (152 ; 184) est reliée solidairement en rotation à la roue de turbine (62 ; 192) et la seconde coque de palier (160 ; 186) est reliée solidairement en rotation avec le rotor (158 ; 188), et en particulier **caractérisée en ce que** la première coque de palier (152 ; 184) et la seconde coque de palier (160 ; 186) sont soutenues sur des zones polaires opposées (150a, 150b ; 182a, 182b) du corps de palier (38), et en particulier **en ce qu'**une zone partielle de l'élément d'arbre (154 ; 190) qui est passée à travers le corps de palier (38), s'étend entre la première coque de palier (152 ; 184) et la seconde coque de palier (160 ; 186), et en particulier **en ce que** l'élément d'arbre (154 ; 190) est passé à travers la première coque de palier (152 ; 184) et la seconde coque de palier (160 ; 186), et en particulier **en ce que** la seconde coque de palier (160) est soutenue sur le rotor (158) via un système à ressort (164), et en particulier **en ce que** le système à ressort (164) exerce une force additionnelle en direction du stator (14), et en particulier **en ce que** la première coque de palier (184) est soutenue sur la roue de turbine (192) via un système à ressort (194).

14. Pompe de recirculation selon l'une des revendications 2 à 13, **caractérisée en ce qu'**un joint (86 ; 90) est agencé dans l'évidement (44) et dans l'élément d'arbre (48).

15. Pompe de recirculation selon l'une des revendications 2 à 14, **caractérisée en ce que** ladite au moins une coque de palier (212) comporte une zone d'étanchéité (214) vers l'évidement (44) pour l'élément d'arbre (198).
